# EUROPÄISCHE PATENTSCHRIFT

(11) **EP 3 122 794 B1**
(45) Veröffentlichungstag und Bekanntmachung des Hinweises auf die Patenterteilung: **04.03.2020**
(21) Anmeldenummer: 15741852.6
(22) Anmeldetag: 27.03.2015
(51) Int. Cl.: C08F 293/00, C04B 24/26, C04B 24/16, C04B 24/24, C04B 28/02, C04B 103/00, C04B 103/40

(54) **BLOCKCOPOLYMER**
BLOCK COPOLYMER
POLYMÈRE SÉQUENCE

(30) Priorität: 27.03.2014 EP 14162090
(43) Veröffentlichungstag der Anmeldung: 01.02.2017
(73) Patentinhaber: Sika Technology AG, 6340 Baar (CH)
(72) Erfinder: WEIDMANN, Jürg, 8500 Frauenfeld (CH); FRUNZ, Lukas, CH-8305 Dietlikon (CH); ZIMMERMANN, Jörg, CH-8400 Winterthur (CH)
(74) Vertreter: Sika Patent Attorneys
(86) Internationale Anmeldenummer: PCT/EP2015/056730
(87) Internationale Veröffentlichungsnummer: WO 2015/144886

(56) Entgegenhaltungen:
- EP-A1- 0 619 277
- EP-A2- 1 767 555
- WO-A1-2004/016668
- WO-A2-2009/140432
- FR-A1- 2 969 156

## Beschreibung

### Technisches Gebiet

Die Erfindung betrifft ein Blockcopolymer, insbesondere zur Verwendung als Dispergiermittel für mineralische Bindemittelzusammensetzungen. Zudem bezieht sich die Erfindung auf ein Verfahren zur Herstellung eines entsprechenden Blockcopolymers und die Verwendung des Blockcopolymers als Dispergiermittel. In einem weiteren Aspekt befasst sich die Erfindung mit einer mineralischen Bindemittelzusammensetzung umfassend das Blockcopolymer sowie einen daraus hergestellten Formkörper.

### Stand der Technik

Dispergiermittel oder Fliessmittel werden in der Bauindustrie als Verflüssiger oder wasserreduzierende Mittel für mineralische Bindemittelzusammensetzungen, wie z.B. Beton, Mörtel, Zemente, Gipse und Kalk, eingesetzt. Die Dispergiermittel sind im Allgemeinen organische Polymere, welche dem Anmachwasser zugesetzt oder als Feststoff den Bindemittelzusammensetzungen beigefügt werden. Dadurch können sowohl die Konsistenz der Bindemittelzusammensetzung während der Verarbeitung als auch die Eigenschaften in ausgehärtetem Zustand in vorteilhafter Weise verändert werden.

Als besonders effektive Dispergiermittel bekannt sind beispielsweise Kammpolymere auf Polycarboxylatbasis. Solche Kammpolymere verfügen über ein Polymerrückgrat und daran gebunden Seitenketten. Entsprechende Polymere sind z.B. in der EP 1 138 697 A1 (Sika AG) beschrieben.

Derartige Kammpolymere sind zwar sehr wirksam, müssen aber je nach Anwendung teilweise relativ hoch dosiert werden. Abgesehen von ökonomischen Nachteilen, kann dies zudem das Abbindeverhalten von Bindemittelzusammensetzungen in unerwünschter Weise beeinflussen. Insbesondere kann durch bekannte Kammpolymere die Abbindezeit unvorteilhaft verlängert werden.

Die unerwünschten Effekte der Kammpolymere können zwar durch Kombination mit weiteren Zusatzmitteln, z.B. Beschleunigern, zumindest zum Teil kompensiert werden. Solche Lösungen sind aber meist kompliziert in der Anwendung und teuer.

In der WO 2004/016668 A1 (Degussa Construction Chemicals GmbH) ist ein Blockcopolymer beschrieben, welches ebenfalls als Dispergiermittel für mineralische Bindemittel eingesetzt wird und deren Verarbeitbarkeit verlängert. Die Blockcopolymere werden durch Polymersiation einer Poly(alkylenoxid) Verbindung (A) mit mindestens einer ethylenisch ungesättigten Monomer-Verbindung (B) hergestellt. Die Verbindung (A) verfügt über terminal aufgepfropfte 2-Halogen-Alkylcarbonsäurederivate, Arylsulfonylhalogenid-Derivate, Thiole, sekundäre Amine, Phosphine oder Derivaten der phosphorigen Säure fungiert als Makroinitiator oder Kettenüberträger.

Die WO 2009/140432 A2 (University of Washington; PhaseRX, Inc.) offenbart Micellen zur Verabreichung von therapeutischen Mitteln (Oligonukleotiden, Peptiden, usw.). Die Micellen weisen eine Vielzahl von Blockcopolymeren auf, welche über einen hydrophilen und einen hydrophoben Block verfügen. Die Blockcopolymere können z.B. einen ersten Block mit über einen Methacrylsäureester gebundenen Polyethylenglykolseitenketten mit 1-20 Ethylenoxideinheiten aufweisen während in einem zweiten Block unter anderem 2-Propylpropensäure enthalten ist.

Aus der FR 2 969 156 A1 (Chryso S.A.S) sind Copolymere bekannt, welche in der Hauptkette ein spezielles Monomer der Formel (A) aufweisen, welches als "Cylink" bezeichnet wird und eine cyclische Gruppe trägt. Nebst Verbindung (A) verfügt das Copolymer über Polyalkylenoxid-Seitenketten. Die Copolymere werden als Verflüssiger von hydraulischen Bindemittelzusammensetzungen verwendet und ermöglichen es, die Verarbeitbarkeit über längere Zeit aufrecht zu erhalten.

Die EP 1 767 555 A2 (Nippon Shokubai Co., Ltd.) offenbart Polymere als Zementzusatzmittel bzw. Dispergiermittel, welche über eine Polyalkylenglykolkette (= "PAG") und mindestens ein daran gebundenes Polymersegment (= "BL") verfügen. Das Polymersegment basiert dabei auf ungesättigten Monomeren, ausgewählt aus ungesättigten Carbonsäuren oder ungesättigten Polyalkylenglykolmonomeren (nicht zu verwechseln mit der genannten Polyalkylenglykolkette). Die Polymere weisen folgende Strukturen auf: (BL)-(PAG)-(BL), (PAG)-(BL), *-[-(PAG)-(BL)-]-* oder (PAG)-(BL)-(PAG). Die konkret offenbarten Polyalkylenglykolketten verfügen über Nitrilgruppen, Schwefelatome oder sie sind beidseitig an weitere Polymerblöcke gebunden.

Die EP 0 619 277 A1 (W.R. Grace & Co.-Conn.; NOF Corporation) offenbart Zusatzmittel zur Verbesserung und Aufrechterhaltung der Fliessfähigkeit von zementösen Zusammensetzungen. Die Zusatzmittel bestehen aus Copolymeren, welche auf Polyoxyalkylen-Alkyenylethern und Maleinsäureanhydrid basieren.

Es besteht daher nach wie vor Bedarf nach verbesserten Dispergiermitteln, welche die genannten Nachteile nicht aufweisen.

### Darstellung der Erfindung

Aufgabe der vorliegenden Erfindung ist es daher, ein verbessertes Dispergiermittel, insbesondere für mineralische Bindemittelzusammensetzungen, bereit zu stellen. Das Dispergiermittel soll insbesondere eine effektive Verflüssigung und gute Verarbeitung von mineralischen Bindemittelzusammensetzungen ermöglichen. Im Besonderen soll das Dispergiermittel das Abbindeverhalten möglichst wenig beeinträchtigen. Weiter ist erwünscht, dass das Dispergiermittel möglichst flexibel und kontrolliert produziert werden kann.

Überraschenderweise wurde gefunden, dass diese Aufgabe durch die Merkmale des unabhängigen Anspruchs 1 gelöst werden kann.

Kern der Erfindung ist demnach ein Blockcopolymer, insbesondere zur Verwendung als Dispergiermittel für mineralische Bindemittelzusammensetzungen, umfassend wenigstens einen ersten Block **A** und wenigstens einen zweiten Block **B,** wobei der erste Block **A** eine Monomereinheit **M1** der Formel I (wie weiter hinten definiert) aufweist, und der zweite Block B eine Monomereinheit **M2** der Formel II (wie weiter hinten definiert) beinhaltet und wobei ein allenfalls vorhandener Anteil von Monomereinheiten **M2** im ersten Block **A** kleiner als 25 Mol-%, insbesondere kleiner gleich 10 Mol-%, ist, bezogen auf sämtliche Monomereinheiten **M1** im ersten Block **A** und wobei ein allenfalls vorhandener Anteil von Monomereinheiten **M1** im zweiten Block **B** kleiner als 25 Mol-% ist, insbesondere kleiner gleich 10 Mol-%, ist, bezogen auf sämtliche Monomereinheiten **M2** im zweiten Block **B.**

Wie sich gezeigt hat, ergeben derartige Blockcopolymere im Vergleich mit bekannten Dispergiermitteln einerseits sehr gute Verflüssigungswirkungen in mineralischen Bindemittelzusammensetzungen und andererseits wird das Abbindeverhalten weniger stark beeinflusst. Zudem können solche Blockcopolymere in einem effizienten Verfahren in unterschiedlichsten Modifikationen in zuverlässiger Art und Weise hergestellt werden. Die erfindungsgemässen Blockcopolymere lassen sich also sehr flexibel und kontrolliert produzieren.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Ein erster Aspekt der Erfindung betrifft ein Blockcopolymer, insbesondere zur Verwendung als Dispergiermittel für mineralische Bindemittelzusammensetzungen, umfassend wenigstens einen ersten Block **A** und wenigstens einen zweiten Block **B,** wobei der erste Block **A** eine Monomereinheit **M1** der Formel I aufweist, 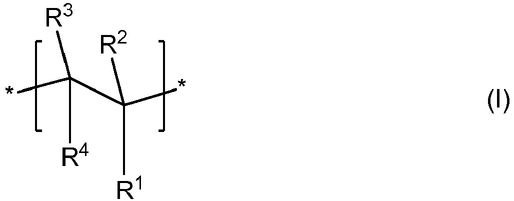 und der zweite Block **B** eine Monomereinheit **M2** der Formel (II) beinhaltet 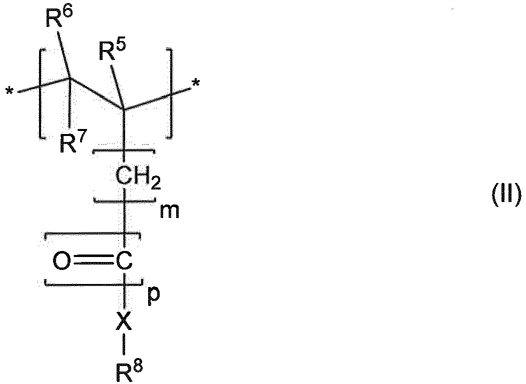 wobei
R¹, jeweils unabhängig voneinander, für -COOM, -SO₂-OM, -O-PO(OM)₂ und/oder -PO(OM)₂ steht,
R², jeweils unabhängig voneinander, für H oder eine Alkylgruppe mit 1 Kohlenstoffatom steht,
R³, R⁵ und R⁶, jeweils unabhängig voneinander, für H oder eine Alkylgruppe mit 1 bis 5 Kohlenstoffatomen stehen,
R⁴ und R⁷, jeweils unabhängig voneinander, für H, -COOM oder eine Alkylgruppe mit 1 bis 5 Kohlenstoffatomen stehen,
oder wobei R¹ mit R⁴ einen Ring bildet zu -CO-O-CO- (Anhydrid),
M, unabhängig voneinander, H⁺, ein Alkalimetallion, ein Erdalkalimetallion, ein zwei oder dreiwertiges Metallion, oder ein Ammoniumion darstellt;
m = 0, 1 oder 2 ist,
p = 0 oder 1 ist,
X, jeweils unabhängig voneinander, für -O- oder -NH- steht,
R⁸ für eine Gruppe der Formel -[AO]ₙ-R^{a} steht,
wobei A = C₂- bis C₄-Alkylen, R^{a} für H, eine C₁- bis C₂₀-Alkylgruppe, -Cyclohexylgruppe oder -Alkylarylgruppe steht, und n = 2 - 250, insbesondere 10 - 200;
und wobei ein allenfalls vorhandener Anteil von Monomereinheiten **M2** im ersten Block **A** kleiner als 25 Mol-%, insbesondere kleiner gleich 10 Mol-%, ist, bezogen auf sämtliche Monomereinheiten **M1** im ersten Block **A** und wobei ein allenfalls vorhandener Anteil von Monomereinheiten **M1** im zweiten Block **B** kleiner als 25 Mol-%, insbesondere kleiner gleich 10 Mol-%, bezogen auf sämtliche Monomereinheiten **M2** im zweiten Block **B.**

Im erfindungsgemässen Blockcopolymer können mehrere unterschiedliche Monomereinheiten **M1** der Formel I und/oder mehrerer unterschiedliche Monomereinheiten **M2** der Formel II vorliegen.

Die Monomereinheiten **M1** und allfällige weitere Monomereinheiten im ersten Block **A** liegen insbesondere statistisch oder zufällig verteilt vor. Ebenso liegen die Monomereinheiten **M2** und allfällige weitere Monomereinheiten im zweiten Block **B** insbesondere statistisch oder zufällig verteilt vor.

Mit anderen Worten liegt der wenigstens eine Block **A** und/oder der wenigstens eine Block **B** bevorzugt jeweils als Teilpolymer mit zufälliger Monomerenverteilung vor.

Der wenigstens eine erste Block **A** umfasst mit Vorteil aus 5-70, insbesondere 7-40, bevorzugt 10 - 25, Monomereinheiten **M1** und/oder der wenigstens eine zweite Block **B** umfasst 5 - 70, insbesondere 7-40, bevorzugt 10 - 25, Monomereinheiten **M2.**

Gemäss einer weiteren bevorzugten Ausführungsform umfasst der erste Block **A** 25 - 35 Monomereinheiten **M1** und/oder der wenigstens eine zweite Block **B** umfasst 10 - 20 Monomereinheiten **M2.**

Ein gewichtsgemitteltes Molekulargewicht M_{W} des gesamten Blockcopolymers liegt insbesondere im Bereich von 10'000 - 150'000 g/mol, vorteilhafterweise 15'000 - 80'000. Im vorliegenden Zusammenhang werden Molekulargewichte, wie das gewichtsgemittelte Molekulargewicht M_{W}, durch Gel-Permeations-Chromatographie (GPC) mit Polyethylenglycol (PEG) als Standard bestimmt. Diese Technik ist dem Fachmann an sich bekannt.

Bevorzugt ist ein allenfalls vorhandener Anteil von Monomereinheiten **M2** im ersten Block **A** kleiner als 15 Mol-%, insbesondere kleiner als 10 Mol-%, speziell kleiner als 5 Mol-% oder kleiner als 1 Mol-%, bezogen auf sämtliche Monomereinheiten **M1** im ersten Block **A.** Zudem ist ein allenfalls vorhandener Anteil von Monomereinheiten **M1** im zweiten Block **B** mit Vorteil kleiner als 15 Mol-%, insbesondere kleiner als 10 Mol-%, speziell kleiner als 5 Mol-% oder kleiner als 1 Mol-%, bezogen auf sämtliche Monomereinheiten **M2** im zweiten Block **B.** Mit Vorteil sind beide Bedingungen zugleich erfüllt.

Speziell vorteilhaft ist beispielsweise ein allenfalls vorhandener Anteil von Monomereinheiten **M2** im ersten Block **A** kleiner als 15 Mol-% (bezogen auf sämtliche Monomereinheiten **M1** im ersten Block **A**) und ein allenfalls vorhandener Anteil von Monomereinheiten **M1** im zweiten Block **B** ist kleiner als 10 Mol-%, (bezogen auf sämtliche Monomereinheiten **M2** im zweiten Block **B**).

Damit liegen die Monomereinheiten **M1** und **M2** im Wesentlichen räumlich getrennt vor, was der Dispergierwirkung des Blockcopolymers zu Gute kommt und im Hinblick auf die Verzögerungsproblematik vorteilhaft ist.

Der erste Block **A** besteht bezogen auf sämtliche Monomereinheiten im ersten Block **A** im Besonderen zu wenigstens 20 Mol-%, insbesondere wenigstens 50 Mol-%, speziell wenigstens 75 Mol-% oder wenigstens 90 Mol-%, aus Monomereinheiten **M1** der Formel I. Der zweite Block **B** besteht bezogen auf sämtliche Monomereinheiten im zweiten Block **B** vorteilhafterweise zu wenigstens 20 Mol-%, insbesondere wenigstens 50 Mol-%, speziell wenigstens 75 Mol-% oder wenigstens 90 Mol-%, aus Monomereinheiten **M2** der Formel II.

Ein Molverhältnis der Monomereinheiten **M1** zu den Monomereinheiten **M2** im Blockcopolymer liegt insbesondere im Bereich von 0.5 - 6, insbesondere 0.7-4, bevorzugt 0.9 - 3.8, weiter bevorzugt 1.0 - 3.7 oder 2 -3.5. Dadurch wird eine optimale Dispergierwirkung in mineralischen Bindemittelzusammensetzungen erreicht.

Insbesondere bei einem Molverhältnis der Monomereinheiten **M1** zu den Monomereinheiten **M2** im Bereich von 1.5 - 6, bevorzugt 1.8 - 5 oder 2 -3.5, wird eine gute und zugleich besonders lang anhaltende Dispergierwirkung in mineralischen Bindemittelzusammensetzungen erreicht werden.

Für spezielle Anwendungen können aber auch andere Molverhältnisse vorteilhaft sein.

Speziell vorteilhaft sind Blockcopolymere bei welchen: R¹ = COOM; R² und R⁵ jeweils unabhängig voneinander, für H, -CH₃ oder Mischungen daraus stehen; R³ und R⁶ jeweils unabhängig voneinander gleich H oder -CH₃ sind, bevorzugt H; R⁴ und R⁷ jeweils unabhängig voneinander für H oder -COOM stehen, bevorzugt für H.

Insbesondere sind R¹ = COOM, R² = H oder CH₃, R³ = R⁴ = H. Damit lässt sich das Blockcopolymer auf der Basis von Acryl- oder Methacrylsäuremonomeren herstellen, was aus ökonomischer Sicht interessant ist. Zudem ergibt sich mit derartigen Blockcopolymeren im vorliegenden Zusammenhang eine gute Dispergierwirkung bei geringer Verzögerung der Abbindezeit.

Ebenfalls vorteilhaft können Blockcopolymere mit R¹ = COOM, R² = H, R³ = H und R⁴ = COOM sein. Solche Kammpolymere lassen sich auf der Basis von Maleinsäuremonomeren herstellen.

Die Gruppe X in Monomereinheit **M2** steht mit Vorteil bei wenigstens 75 Mol-%, insbesondere bei wenigstens 90 Mol-%, speziell bei wenigstens 95 Mol-% oder wenigstens 99 Mol-% aller Monomereinheiten **M2** für -O- (= Sauerstoffatom).

Vorteilhafterweise sind R⁵ = H oder CH₃, R⁶ = R⁷ = H und X = -O-. Derartige Blockcopolymere lassen sich z.B. ausgehend von (Meth)acrylsäureestern, Vinyl-, (Meth)allyl- oder Isoprenolethern herstellen.

Bei einer besonders vorteilhaften Ausführungsform stehen R² und R⁵ jeweils für Mischungen aus 40 - 60 Mol-% H und 40 - 60 Mol-% -CH₃.

Gemäss weiteren vorteilhaften Ausführungsform ist R¹ = COOM, R² = H, R⁵ = -CH₃ und R³ = R⁴ = R⁶ = R⁷ = H.

Bei einer anderen vorteilhaften Ausführungsform ist R¹ = COOM, R² = R⁵ = H oder -CH₃ und R³ = R⁴ = R⁶ = R⁷ = H.

Der Rest R⁸ in Monomereinheit **M2** besteht, bezogen auf sämtliche Reste R⁸ im Blockcopolymer, insbesondere zu wenigstens 50 Mol-%, insbesondere wenigstens 75 Mol-%, bevorzugt wenigstens 95 Mol-% oder wenigsten 99 Mol-%, aus einem Polyethylenoxid. Ein Anteil an Ethylenoxideinheiten bezogen auf sämtliche Alkylenoxideinheiten im Blockcopolymer beträgt insbesondere mehr als 75 Mol-%, insbesondere mehr als 90 Mol-%, bevorzugt mehr als 95 Mol-% und im Speziellen 100 Mol-%.

Insbesondere weist R⁸ im Wesentlichen keine hydrophoben Gruppen auf, insbesondere keine Alkylenoxide mit drei oder mehr Kohlenstoffatomen. Damit ist insbesondere gemeint, dass ein Anteil an Alkylenoxiden mit drei oder mehr Kohlenstoffatomen bezogen auf sämtliche Alkylenoxide weniger als 5 Mol-%, insbesondere weniger als 2 Mol-%, bevorzugt weniger als 1 Mol-% oder weniger als 0.1 Mol-% beträgt. Im Besonderen liegen keine Alkylenoxide mit drei oder mehr Kohlenstoffatomen vor oder deren Anteil beträgt 0 Mol-%.

R^{a} steht mit Vorteil für H und/oder eine Methylgruppe. Besonders vorteilhaft ist A = C₂-Alkylen und R^{a} steht für H oder eine Methylgruppe.

Insbesondere ist der Parameter n = 10 - 150, bevorzugt n = 15 - 100, besonders bevorzugt n = 17 - 70, im Speziellen n = 19 - 45 oder n = 20 - 25. Im Besonderen in den genannten Vorzugsbereichen werden dadurch ausgezeichnete Dispergierwirkungen erzielt.

Weiter kann es vorteilhaft sein, wenn das Blockcopolymer wenigstens eine weitere Monomereinheit **MS** umfasst, welche sich insbesondere von den Monomereinheiten **M1** und **M2** chemisch unterscheidet. Im Besonderen können mehrere unterschiedliche weitere Monomereinheiten **MS** vorliegen. Dadurch können die Eigenschaften des Blockcopolymers weiter modifiziert und beispielsweise im Hinblick auf spezielle Anwendungen angepasst werden.

Besonders vorteilhaft ist die wenigstens eine weitere Monomereinheit **MS** eine Monomereinheit der Formel III: 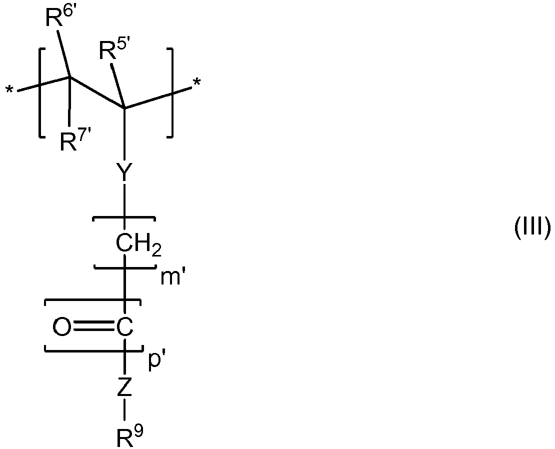 wobei
R^{5'}, R^{6'}, R^{7'}, m' und p' wie R⁵, R⁶, R⁷, m und p definiert sind;
Y, jeweils unabhängig voneinander, für eine chemische Bindung oder -O- steht;
Z, jeweils unabhängig voneinander, für eine chemische Bindung, -O- oder -NH- steht;
R⁹, jeweils unabhängig voneinander, für eine Alkylgruppe, Cycloalkylgruppe, Alkylarylgruppe, Arylgruppe, Hydroxyalkylgruppe oder eine Acetoxyalkylgruppe, jeweils mit 1 - 20 C-Atomen, steht.

Vorteilhaft sind z.B. Monomereinheiten **MS** wobei m' = 0 ist, p' = 0 ist, Z und Y eine chemische Bindung darstellen und R⁹ für eine Alkylarylgruppe mit 6 - 10 C-Atomen steht.

Auch geeignet sind insbesondere bei Monomereinheiten **MS** bei welchen m' = 0 ist, p' = 1 ist, Y für -O- steht, Z eine chemische Bindung darstellt und R⁹ für eine Alkylgruppe mit 1 - 4 C-Atomen steht.

Weiter sind Monomereinheit **MS** geeignet wobei m' = 0 ist, p' = 1 ist, Y für eine chemische Bindung steht, Z für -O- steht und R⁹ eine Alkylgruppe und/oder eine Hydroxyalkylgruppe mit 1 - 6 C-Atomen darstellt.

Besonders vorteilhaft besteht die wenigstens eine weitere Monomereinheit **MS** aus einpolymerisiertem Vinylacetat, Styrol und/oder Hydroxyalkyl(meth)acrylat, insbesondere Hydroxyethylacrylat.

Die wenigstens eine weitere Monomereinheit **MS** kann Bestandteil des ersten Blocks **A** und/oder des zweiten Blocks **B** sein. Auch möglich ist es, dass die wenigstens eine weitere Monomereinheit **MS** Bestandteil eins zusätzlichen Blocks des Blockcopolymers ist. Insbesondere können in den verschiedenen Blöcken unterschiedliche Monomereinheiten **MS** vorliegen.

Falls im ersten Block **A** vorhanden, weist die wenigstens eine weitere Monomereinheit **MS** im ersten Block **A** mit Vorteil einen Anteil von 0.001 - 80 Mol-%, bevorzugt 20 - 75 Mol-%, speziell 30 - 70 Mol-%, bezogen auf sämtliche Monomereinheiten im ersten Block **A,** auf.

Sofern im zweiten Block **B** vorhanden weist die wenigstens eine weitere Monomereinheit **MS** im zweiten Block **B** insbesondere einen Anteil von 0.001-80 Mol-%, bevorzugt 20 - 75 Mol-%, speziell 30 - 70 Mol-% oder 50 - 70 Mol-%, bezogen auf sämtliche Monomereinheiten im zweiten Block **B,** auf.

Gemäss einer vorteilhaften Ausführungsform ist im ersten Block **A** und/oder im zweiten Block **B** die wenigstens eine weitere Monomereinheit **MS** mit einem Anteil von Anteil von 20 - 75 Mol-%, speziell 30 - 70 Mol-%, bezogen auf sämtliche Monomereinheiten im jeweiligen Block, vorhanden.

Gemäss einer weiteren vorteilhaften Ausführungsform ist zwischen dem ersten Block **A** und dem zweiten Block **B** wenigstens ein weiterer Block **C** angeordnet, welcher sich vom ersten und vom zweiten Block chemisch und/oder strukturell unterscheidet.

Vorteilhafterweise umfasst der wenigstens eine weitere Block **C** Monomereinheiten **MS** wie vorstehend beschrieben oder er besteht daraus. Es können aber zusätzlich oder anstelle der Monomereinheiten **MS** auch weitere Monomereinheiten vorliegen.

Insbesondere besteht der wenigstens eine weitere Block C zu wenigstens 50 Mol-%, insbesondere wenigstens 75 Mol-%, bevorzugt wenigstens 90 Mol-% oder wenigstens 95 Mol-% aus Monomereinheiten **MS** wie vorstehend beschrieben.

Gemäss einer besonders vorteilhaften Ausführungsform handelt es sich beim erfindungsgemässen Blockcopolymer um ein Diblockcopolymer, bestehend aus einem Block **A** und einem Block **B.**

Ebenfalls geeignet sind Blockcopolymere, welche wenigstens zwei Blöcke des ersten Blocks **A** und/oder wenigstens zwei Blöcke des zweiten Blocks **B** enthalten. Insbesondere handelt es sich dabei um Blockcopolymere, welche den ersten Block **A** zweimal enthalten und den zweiten Block **B** einmal oder Blockcopolymere welche den ersten Block **A** einmal enthalten und den zweiten Block **B** zweimal. Solche Blockcopolymer liegen insbesondere als Triblockcopolymere, Tetrablockcopolymere oder Pentablockcopolymere vor, bevorzugt Triblockcopolymere. Bei den Tetrablockcopolymeren und den Pentablockcopolymeren sind ein oder zwei weitere Blöcke vorhanden, beispielsweise Blöcke vom Typ Block **C** wie sie vorstehend beschrieben sind.

Ein besonders vorteilhaftes Blockcopolymer weist wenigstens eines oder mehrere der folgenden Merkmale auf:
(i) Block **A** weist 7-40, insbesondere 10 - 25 oder 25 - 35, Monomereinheiten **M1** auf und Block **B** weist 7 - 40, insbesondere 10-25 oder 10 - 20, Monomereinheiten **M2** auf.
(ii) Der erste Block **A** besteht bezogen auf sämtliche Monomereinheiten im ersten Block **A** zu wenigstens 75 Mol-%, bevorzugt wenigstens 90 Mol-%, aus Monomereinheit **M1** der Formel I;
(iii) Der zweite Block **B** besteht bezogen auf sämtliche Monomereinheiten im zweiten Block **B** zu wenigstens 75 Mol-%, bevorzugt wenigstens 90 Mol-%, aus Monomereinheiten **M2** der Formel II;
(iv) Ein Molverhältnis der Monomereinheiten **M1** zu den Monomereinheiten **M2** im Blockcopolymer liegt im Bereich von 0.5 - 6, bevorzugt 0.8 - 3.5;
(v) R¹ steht für COOM;
(vi) R² und R⁵ stehen für H oder CH₃, bevorzugt CH₃;
(vii) R³ = R⁴ = R⁶ = R⁷ = H;
(viii) m = 0 und p = 1;
(ix) X = -O-
(x) A = C₂-Alkylen und n = 10 - 150, bevorzugt 15 - 50;
(xi) R^{a} = H oder -CH₃, bevorzugt CH₃;

Speziell bevorzugt ist ein Diblockcopoplymer, bestehend aus den Blöcken A und B, welches zumindest sämtliche Merkmale (i) - (iv) aufweist. Weiter bevorzugt ist dabei ein Diblockcopolymer welches sämtliche Merkmale (i) - (xi) aufweist. Noch weiter bevorzugt ist ein Diblockcopolymer welches sämtliche Merkmale (i) - (xi) in den jeweils bevorzugten Ausführungen realisiert.

Ebenfalls vorteilhaft ist ein Triblockcopolymer, bestehend aus den Blöcken **A, B** und **C,** insbesondere in der Abfolge A-C-B, wobei das Triblockcopolymer zumindest sämtliche Merkmale (i) - (iv) aufweist. Weiter bevorzugt ist dabei ein Triblockcopolymer welches sämtliche Merkmale (i) - (xi) aufweist. Noch weiter bevorzugt ist ein Triblockcopolymer welches sämtliche Merkmale (i) - (xi) in den jeweils bevorzugten Ausführungen realisiert. Block **C** umfasst dabei mit Vorteil Monomereinheiten **MS** wie sie vorstehend beschrieben wurden oder Block **C** besteht daraus.

In einer speziellen Ausführungsform ist in diesen Diblockcopolymeren oder Triblockcopolymeren zudem in Block **A** und **B** zusätzlich eine weitere Monomereinheit **MS** wie sie vorstehend beschrieben wurde, insbesondere eine weitere Monomereinheit **MS** der Formel III, enthalten.

Ein weiterer Aspekt der vorliegenden Erfindung betrifft ein Verfahren zur Herstellung eines Blockcopolymers umfassend einen Schritt
a) der Polymerisation von Monomeren **m1** der Formel IV 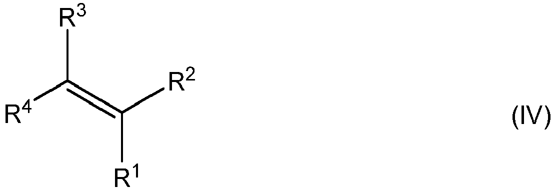 sowie einen Schritt
b) der Polymerisation von Monomeren **m2** der Formel V 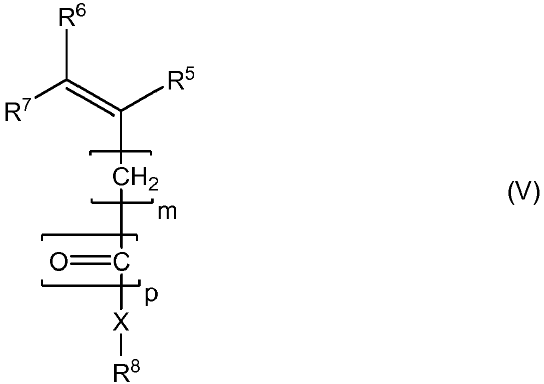
wobei R¹, R², R³, R⁴, R⁵, R⁶, R⁷, R⁸, m, p und X wie vorstehend definiert sind und wobei
bei Schritt a) ein allenfalls vorhandener Anteil an Monomer **m2** kleiner als 25 Mol-%, insbesondere kleiner gleich 10 Mol-%, bezogen auf die Monomere **m1,** ist;
und bei Schritt b) ein allenfalls vorhandener Anteil an Monomer **m1** kleiner als 25 Mol-%, insbesondere kleiner gleich 10 Mol-%, bezogen auf die Monomere **m2,** ist;
und wobei die Schritte a) und b) zeitlich nacheinander, in beliebiger Reihenfolge ausgeführt werden.

Die Polymerisation in Schritt a) wird insbesondere so lange durchgeführt, bis 75 - 95 Mol-%, bevorzugt 85 - 95 Mol.-%, insbesondere 86 - 92 Mol-%, der ursprünglich vorgelegten Monomere **m1** umgesetzt bzw. polymerisiert sind.

Insbesondere wird die Polymerisation in Schritt b) entsprechend so lange durchgeführt, bis 75 - 95 Mol-%, insbesondere 80 - 92 Mol-%, der ursprünglich vorgelegten Monomere **m2** umgesetzt bzw. polymerisiert sind.

Der Umsatz der Monomere **m1** und **m2** bzw. der Fortschritt der Polymerisation in den Schritten a) und b) kann z.B. mit Hilfe von Flüssigkeitschromatographie, insbesondere Hochleistungsflüssigkeitschromatographie (HPLC), in an sich bekannter Weise kontrolliert werden.

Wie sich gezeigt hat, ist es von Vorteil, die Monomere **m1** und **m2** in den Schritten a) und b) bis zu den vorstehend genannten Umsätzen umzusetzen. Zudem ist es vorteilhaft, die Schritte a) und b) unabhängig von der gewählten Reihenfolge unmittelbar aufeinander folgend durchzuführen. Dadurch können die Polymerisationsreaktion in den Schritten a) und b) bestmöglich aufrecht zu erhalten werden.

Das Verfahren kann z.B. durchgeführt werden, indem in Schritt a) Monomere **m1** in einem Lösungsmittel, z.B. Wasser, vorgelegt und sodann zu einem ersten Block **A** polymerisiert werden. Sobald der gewünschte Umsatz an Monomer **m1** erreicht ist (z.B. 75 - 95 Mol-%, insbesondere 80 - 92 Mol-%; siehe vorstehend), werden ohne zeitliche Verzögerung in Schritt b) Monomere **m2** zugegeben und die Polymerisation fortgesetzt. Dabei werden die Monomere **m2** insbesondere an den bereits gebildeten Block **A** angefügt, wodurch ein zweiter Block **B** gebildet wird. Die Polymerisation wird mit Vorteil wiederum so lange weitergeführt, bis der gewünschte Umsatz an Monomer **m2** (z.B. 75 - 95 Mol-%, insbesondere 80 - 92 Mol-%; siehe vorstehend) erreicht ist. Dadurch wird z.B. ein Diblockcopolymer umfassend einen ersten Block **A** und einen damit verbundenen zweiten Block **B** erhalten.

Gemäss einer weiteren vorteilhaften Ausführungsform liegt in Schritt a) und/oder in Schritt b) wenigstens ein weiteres polymerisierbares Monomer **ms** vor. Das wenigstens eine weitere polymerisierbare Monomer **ms** wird in diesem Fall insbesondere zusammen mit dem Monomer **m1** und/oder dem Monomer **m2** polymerisiert.

Es ist aber auch möglich, zusätzlich zu Schritt a) und Schritt b) einen weiteren Schritt c) der Polymerisation des wenigstens eines weiteren polymerisierbaren Monomer **ms** vorzusehen. Dadurch kann ein Blockcopolymer mit einem zusätzlichen Block **C** hergestellt werden. Insbesondere wird Schritt c) zeitlich zwischen Schritt a) und Schritt b) durchgeführt. Damit wird der zusätzliche Block **C** räumlich zwischen den Blöcken **A** und **B** angeordnet.

Das wenigstens eine weitere polymerisierbare Monomer **ms** ist, unabhängig davon wie dieses in das Blockcopolymer integriert wird, insbesondere ein Monomer der Formel VI 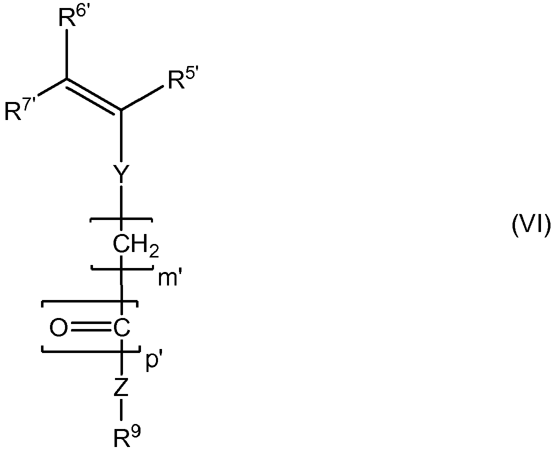 wobei
R^{5'}, R^{6'}, R^{7'}, R⁹, m', p', Y und Z wie vorstehend definiert sind.

Vorteilhafte Anteile, Verhältnisse und Ausgestaltungen der Monomere **m1, m2, ms** und von allfälligen weiteren Monomeren entsprechen den bereits vorstehend genannten Anteilen, Verhältnissen und Ausgestaltungen welche im Zusammenhang mit den der Monomereinheiten **M1, M2** und **MS** beschrieben wurden.

Besonders vorteilhaft ist das wenigstens eine weiter Monomer **ms** ausgewählt aus Vinylacetat, Styrol, N-vinyl-pyrrolidon und/oder Hydroxyalkyl(meth)acrylat, insbesondere Hydroxyethylacrylat.

Bevorzugt erfolgt die Polymerisation in Schritt a) und/oder in Schritt b) in einer wässrigen Lösung. Insbesondere erfolgen die Polymerisationen in beiden Schritten a) und b) in wässrigen Lösungen. Dies gilt entsprechend auch für Schritt c), sofern dieser durchgeführt wird. Wie es sich gezeigt hat, wirkt sich dies positiv auf die Dispergierwirkung des Blockcopolymers aus.

Es ist aber auch möglich andere Lösungsmittel vorzusehen, beispielsweise Ethanol.

Die Polymerisation in Schritt a) und/oder b) erfolgt mit Vorteil durch eine freie radikalische Polymerisation, bevorzugt durch eine lebend radikalische Polymerisation, insbesondere durch Reversible Additions-Fragmentierungs Kettenübertragungs-Polymerisation (RAFT). Dies gilt entsprechend auch für Schritt c), sofern dieser durchgeführt wird.

Als Initiator für die Polymerisationen wird insbesondere ein Radikalstarter, bevorzugt eine Azoverbindung und/oder ein Peroxid eingesetzt. Geeignete Peroxide sind z.B. ausgewählt aus der Gruppe bestehend aus Dibenzoylperoxid (DBPO), Di-tert-butylperoxid und Diacetylperoxid.

Besonders vorteilhaft als Initiator ist eine Azoverbindung, wie beispielsweise Azobisisobutyronitril (AIBN) oder Azo-bis-isobutyramidin (AIBA). Andere Radikalstarter, z.B. Natriumpersulfat oder Di-tert-butylhyponitrit, können unter Umständen aber auch verwendet werden.

Bevorzugt sind in Schritt a) und/oder in Schritt b) einer oder mehrere Vertreter aus der Gruppe bestehend aus Dithioester, Dithiocarbamate, Trithiocarbonate und Xanthate anwesend. Dies sind sogenannte "RAFT-Agentien", welche es ermöglichen, den Polymerisationsprozess zu kontrollieren. Dies gilt entsprechend auch für Schritt c), sofern dieser durchgeführt wird.

Insbesondere erfolgt die Polymerisation in Schritt a), Schritt b) und/oder Schritt c) bei einer Temperatur in Bereich von 50 - 95°C, insbesondere 70 - 90°C.

Vorteilhafterweise wird unter Inertgasatmosphäre gearbeitet, z.B. unter Stickstoffatmosphäre.

Bei einem besonders bevorzugten Verfahren wird Schritt b) vor Schritt a) ausgeführt.

Gemäss einem vorteilhaften Verfahren wird Schritt b) vor Schritt a) ausgeführt und es finden keine weiteren Polymerisationsschritte mehr statt. Damit ist in einfacher Art und Weise ein Diblockcopolymer erhältlich.

Ein weiterer Aspekt der Erfindung betrifft die Verwendung eines Blockcopolymers als Dispergiermittel für mineralische Bindemittelzusammensetzungen, wobei das Blockcopolymer wenigstens einen ersten Block **A** und wenigstens einen zweiten Block **B** umfasst, wobei der erste Block A eine Monomereinheit **M1** der Formel I aufweist, 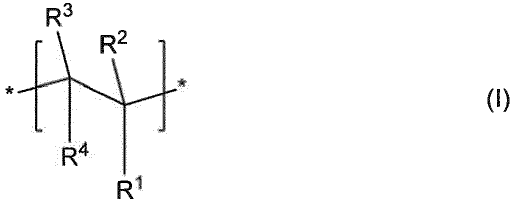 und der zweite Block B eine Monomereinheit **M2** der Formel II beinhaltet 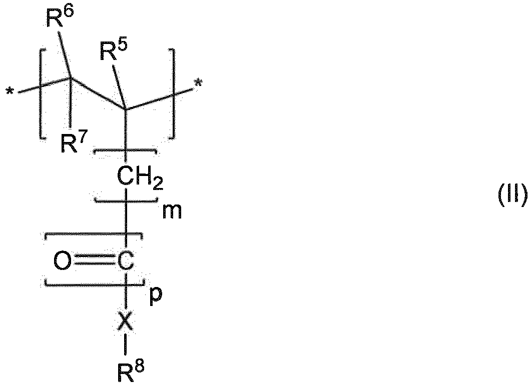 wobei
R¹, jeweils unabhängig voneinander, für -COOM, -SO₂-OM, -O-PO(OM)₂ und/oder -PO(OM)₂ steht,
R², R³, R⁵ und R⁶, jeweils unabhängig voneinander, für H oder eine Alkylgruppe mit 1 bis 5 Kohlenstoffatomen stehen,
R⁴ und R⁷, jeweils unabhängig voneinander, für H, -COOM oder eine Alkylgruppe mit 1 bis 5 Kohlenstoffatomen stehen,
oder wobei R¹ mit R⁴ einen Ring bildet zu -CO-O-CO-,
M, unabhängig voneinander, H⁺, ein Alkalimetallion, ein Erdalkalimetallion, ein zwei oder dreiwertiges Metallion, ein Ammoniumion oder eine organische Ammoniumgruppe darstellt;
m = 0, 1 oder 2 ist,
p = 0 oder 1 ist,
X, jeweils unabhängig voneinander, für -O- oder -NH- steht,
R⁸ für eine Gruppe der Formel -[AO]ₙ-R^{a} steht,
   wobei A = C₂- bis C₄-Alkylen, R^{a} für H, eine C₁- bis C₂₀-Alkylgruppe, -Cyclohexylgruppe oder -Alkylarylgruppe steht, und n = 2 - 250, insbesondere 10 - 200 ist;
und wobei ein allenfalls vorhandener Anteil von Monomereinheiten **M2** im ersten Block **A** kleiner als 25 Mol-%, insbesondere kleiner gleich 10 Mol-%, ist, bezogen auf sämtliche Monomereinheiten **M1** im ersten Block **A** und wobei ein allenfalls vorhandener Anteil von Monomereinheiten **M1** im zweiten Block **B** kleiner als 25 Mol-%, insbesondere kleiner gleich 10 Mol-%, ist, bezogen auf sämtliche Monomereinheiten **M2** im zweiten Block **B.**

Das Blockcopolymer kann insbesondere zur Verflüssigung, zur Wasserreduktion und/oder zur Verbesserung der Verarbeitbarkeit einer mineralischen Bindemittelzusammensetzung eingesetzt werden.

Insbesondere kann das Blockcopolymer zur Verlängerung der Verarbeitbarkeit einer mineralischen Bindemittelzusammensetzung eingesetzt werden.

Weiter betrifft die vorliegende Erfindung zudem eine mineralische Bindemittelzusammensetzung, enthaltend mindestens ein wie vorstehend beschriebenes Blockcopolymer.

Die mineralische Bindemittelzusammensetzung enthält zumindest ein mineralisches Bindemittel. Unter dem Ausdruck "mineralisches Bindemittel" ist insbesondere ein Bindemittel zu verstehen, welches in Anwesenheit von Wasser in einer Hydratationsreaktion zu festen Hydraten oder Hydratphasen reagiert. Dies kann beispielsweise ein hydraulisches Bindemittel (z.B. Zement oder hydraulischer Kalk), ein latent hydraulisches Bindemittel (z.B. Schlacke), ein puzzolanisches Bindemittel (z.B. Flugasche) oder ein nicht hydraulisches Bindemittel (Gips oder Weisskalk) sein.

Insbesondere enthält das mineralische Bindemittel oder die Bindemittelzusammensetzung ein hydraulisches Bindemittel, bevorzugt Zement. Besonders bevorzugt ist ein Zement mit einem Zementklinkeranteil von ≥ 35 Gew.-%. Insbesondere ist der Zement vom Typ CEM I, CEM II, CEM III, CEM IV oder CEM V (gemäss Norm EN 197-1). Ein Anteil des hydraulischen Bindemittels am gesamten mineralischen Bindemittel beträgt mit Vorteil wenigstens 5 Gew.-%, insbesondere wenigstens 20 Gew.-%, bevorzugt wenigstens 35 Gew.-%, im Speziellen wenigstens 65 Gew.-%. Gemäss einer weiteren vorteilhaften Ausführungsform besteht das mineralische Bindemittel zu ≥ 95 Gew.-% aus hydraulischem Bindemittel, insbesondere aus Zement oder Zementklinker.

Es kann aber auch vorteilhaft sein, wenn das mineralische Bindemittel oder die mineralische Bindemittelzusammensetzung andere Bindemittel enthält oder daraus besteht. Dies sind insbesondere latent hydraulische Bindemittel und/oder puzzolanische Bindemittel. Geeignete latenthydraulische und/oder puzzolanische Bindemittel sind z.B. Schlacke, Flugasche und/oder Silicastaub. Ebenso kann die Bindemittelzusammensetzung inerte Stoffe wie z.B. Kalkstein, Quarzmehle und/oder Pigmente enthalten. In einer vorteilhaften Ausführungsform enthält das mineralische Bindemittel 5 - 95 Gew.-%, insbesondere 5 - 65 Gew.-%, besonders bevorzugt 15 - 35 Gew.-%, latenthydraulische und/oder puzzolanische Bindemittel. Vorteilhafte latenthydraulische und/oder puzzolanische Bindemittel sind Schlacke und/oder Flugasche.

In einer besonders bevorzugten Ausführungsform enthält das mineralische Bindemittel ein hydraulisches Bindemittel, insbesondere Zement oder Zementklinker, und ein latenthydraulisches und/oder puzzolanisches Bindemittel, bevorzugt Schlacke und/oder Flugasche. Der Anteil des latenthydraulischen und/oder puzzolanischen Bindemittels beträgt dabei besonders bevorzugt 5 - 65 Gew.-%, besonders bevorzugt 15 - 35 Gew.-%, während wenigstens 35 Gew.-%, im Speziellen wenigstens 65 Gew.-%, des hydraulischen Bindemittels vorliegen.

Bei der mineralischen Bindemittelzusammensetzung handelt es sich bevorzugt um eine Mörtel- oder Betonzusammensetzung.

Die mineralische Bindemittelzusammensetzung ist insbesondere eine verarbeitbare und/oder mit Wasser angemachte mineralische Bindemittelzusammensetzung.

Ein Gewichtsverhältnis von Wasser zu Bindemittel in der mineralischen Bindemittelzusammensetzung liegt bevorzugt im Bereich von 0.25 - 0.7, insbesondere 0.26 - 0.65, bevorzugt 0.27 - 0.60, im Speziellen 0.28 - 0.55.

Das Blockcopolymer wird mit Vorteil mit einem Anteil von 0.01 - 10 Gew.-%, insbesondere 0.1 - 7 Gew.-% oder 0.2 - 5 Gew.-%, bezogen auf den Bindemittelgehalt, eingesetzt. Der Anteil des Blockcopolymers bezieht sich dabei auf das Blockcopolymer an sich. Bei einem Blockcopolymer in Form einer Lösung ist entsprechend der Feststoffgehalt massgebend.

Ein zusätzlicher Aspekt der vorliegenden Erfindung bezieht sich auf einen Formkörper, insbesondere ein Bestandteil eines Bauwerks, erhältlich durch Aushärten einer wie vorstehend beschriebenen mineralischen Bindemittelzusammensetzung enthaltend ein Blockcopolymer nach Zugabe von Wasser.

Ein Bauwerk kann z.B. eine Brücke, ein Gebäude, ein Tunnel, eine Fahrbahn, oder ein Start- und Landebahn sein.

Aus den nachfolgenden Ausführungsbeispielen ergeben sich weitere vorteilhafte Ausführungsformen der Erfindung.

### Kurze Beschreibung der Zeichnung

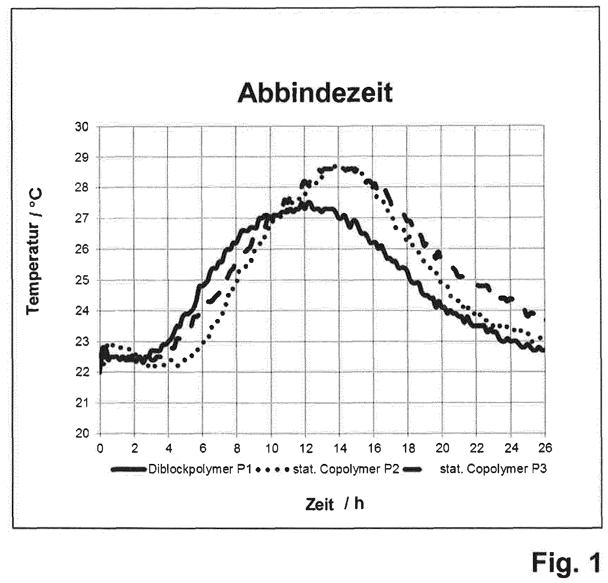

Die zur Erläuterung der Ausführungsbeispiele verwendete Fig.1 zeigt die Wärmeentwicklung von Mörtelmischungen, welche beim Anmachen mit einem Dispergiermittel in Form eines Diblockcopolymers **P1** (durchgehende Linie), eines durch radikalische Copolymerisation hergestellten statistischen Polymers **P2** (gepunktete Linie) und eines durch polymer-analoge Veresterung hergestellten statistischen Polymers **P3** (unterbrochene Linie) versetzt wurden.

### Ausführungsbeispiele

### 1. Herstellungsbeispiele für Polymere

### 1.1 Diblockcopolymer P1 (n = 20; M1/M2 = 1; RAFT)

Zur Herstellung eines Diblockcopolymers **P1** mittels RAFT-Polymerisation wurden in einem Rundkolben, ausgestattet mit einem Rückflusskühler, Rührwerk, Thermometer und einem Inertgaseinleitungsrohr 57.4 g 50%-iges Methoxy-Polyethylenglykol₁₀₀₀-Methacrylat (0.03 mol; mittleres Molekülgewicht: 1'000 g/mol; ∼20 Ethylenoxideinheiten/Molekül) und 18.4 g deionisiertes Wasser vorgelegt. Das Reaktionsgemisch wurde unter kräftigem Rühren auf 80°C erwärmt. Ein leichter Inertgasstrom (N₂) wurde während dem Aufwärmen und der ganzen restlichen Reaktionsdauer durch die Lösung geführt.

Zum Gemisch wurden sodann 273 mg 4-Cyano-4-(thiobenzoyl)pentanoic acid (0.85 mmol; RAFT-Agens) gegeben. Nachdem sich die Substanz vollständig gelöst hatte, wurden 42 mg AIBN (0.26 mmol; Initiator) zugegeben. Von nun an wurde der Umsatz mittels HPLC regelmässig bestimmt.

Sobald die Umsetzung, bezogen auf Methoxy-Polyethylenglykol-Methacrylat, über 80 Mol-% betrug, wurden dem Reaktionsgemisch 2.33 g Methacrylsäure (0.03 mol) zugegeben. Das Gemisch wurde für weitere 4 h reagieren und anschliessend abkühlen gelassen. Zurück blieb eine klare, leicht rötliche, wässrige Lösung mit einem Feststoffgehalt von rund 40 Gew.-%. Das Molverhältnis von Methacrylsäure zu Methoxy-Polyethylenglykol-Methacrylat beträgt 1.

### 1.2 Statistisches Polymer P2 (Vergleichsbeispiel; n = 20; M1/M2 = 1; RAFT)

Zu Vergleichszwecken wurde ein zweites Polymer **P2** mit statistischer bzw. zufälliger Monomerenverteilung hergestellt. Dabei wurde analog zur Herstellung von Polymer **P1** (vorangehendes Kapitel) vorgegangen, die Methacrylsäure jedoch bereits zu Beginn zusammen mit dem Methoxy-Polyethylenglykol1000-Methacrylat vorgelegt. Der Feststoffgehalt des Polymers **P2** beträgt wiederum rund 40 Gew.-%.

### 1.3 Statistisches Polymer P3 (Vergleichsbeispiel; n = 20; M1/M2 = 1; PAE)

Ebenfalls zu Vergleichszwecken wurde ein weiteres Polymer **P3** mit statistischer bzw. zufälliger Monomerenverteilung hergestellt. Bei Polymer **P3** wurde jedoch durch polymer-analoge Veresterung (PAE) hergestellt. Dabei wurde im Wesentlichen wie in der EP 1 138 697 B1 auf Seite 7 Zeile 20 bis Seite 8 Zeile 50, sowie in den darin genannten Beispielen beschrieben, vorgegangen. Konkret wurde eine Polymethacrylsäure mit Methoxy-Polyethylenglykol₁₀₀₀ (einseitig Methoxy-terminiertes Polyethylenglykol mit einem mittleren Molekülgewicht von 1'000 g/mol; ∼20 Ethylenoxideinheiten/Molekül) verestert, so dass ein Molverhältnis von Methacrylsäureeinheiten zu Estergruppen gleich 1 resultierte (**M1/M2** = 1). Der Feststoffgehalt des Polymers **P3** beträgt wiederum rund 40 Gew.-%.

### 1.4 Diblockcopolymer P4 (n = 9; M1/M2 = 1; RAFT; H₂O)

Diblockcopolymer **P4** wurde analog zu Diblockcopolymer **P1** hergestellt, wobei aber anstelle von Methoxy-Polyethylenglykol₁₀₀₀-Methacrylat die entsprechende Menge an Methoxy-Polyethylenglykol₄₀₀-Methacrylat (mittleres Molekülgewicht: 400 g/mol; ∼9 Ethylenoxideinheiten/Molekül) verwendet wurde. Der Feststoffgehalt des Polymers **P4** liegt wiederum bei rund 40 Gew.-%.

### 1.5 Diblockcopolymer P5 (n = 9; M1/M2 = 1; RAFT; EtOH)

Diblockcopolymer **P5** wurde analog zu Diblockcopolymer **P4** hergestellt, wobei aber anstelle von Wasser die entsprechende Menge Ethanol als Lösungsmittel verwendet wurde. Der Feststoffgehalt des Polymers **P5** liegt wiederum bei rund 40 Gew.-%.

### 1.6 Diblockcopolymer P6 (n = 20; M1/M2 = 3; RAFT)

Diblockcopolymer **P6** wurde analog zu Diblockcopolymer **P1** hergestellt, wobei allerdings die eingesetzten Mengen an Methacrylsäure und Methoxy-Polyethylenglykol₁₀₀₀-Methacrylat so an angepasst wurden, dass das Molverhältnis von Methacrylsäure zu Methoxy-Polyethylenglykol-Methacrylat bei gleichem Molekulargewicht des Diblockcopolymers bei 3 liegt. Der Feststoffgehalt des Polymers **P6** beträgt rund 40 Gew.-%.

### 1.7 Diblockcopolymer P7 (n = 9; M1/M2 = 3; RAFT; H₂O)

Diblockcopolymer **P7** wurde analog zu Diblockcopolymer **P6** hergestellt, wobei aber anstelle von Methoxy-Polyethylenglykol₁₀₀₀-Methacrylat die entsprechende Menge an Methoxy-Polyethylenglykol₄₀₀-Methacrylat (mittleres Molekülgewicht: 400 g/mol; ∼9 Ethylenoxideinheiten/Molekül) verwendet wurde. Der Feststoffgehalt des Polymers **P7** liegt wiederum bei rund 40 Gew.-%.

### 1.8 Diblockcopolymer P8 (n = 9; M1/M2 = 3; RAFT; EtOH)

Diblockcopolymer **P8** wurde analog zu Diblockcopolymer **P7** hergestellt, wobei aber anstelle von Wasser die entsprechende Menge Ethanol als Lösungsmittel verwendet wurde. Der Feststoffgehalt des Polymers **P6** liegt ebenfalls bei rund 40 Gew.-%.

### 1.9 Übersicht Polymere

Tabelle 1 gibt einen Überblick über die hergestellten und im Folgenden verwendeten Polymere.

**Tabelle 1: Hergestellte Polymere**

| **Nr.** | **Struktur** | **n** | **M1/M2** | **Lösungsmittel** | **Herstellungsmethode** |
|---|---|---|---|---|---|
| **P1** | Diblock | 20 | 1 | Wasser | RAFT |
| **P2** | Statistisch | 20 | 1 | Wasser | RAFT |
| **P3** | Statistisch | 20 | 1 | Wasser | PAE |
| **P4** | Diblock | 9 | 1 | Wasser | RAFT |
| **P5** | Diblock | 9 | 1 | Ethanol | RAFT |
| **P6** | Diblock | 20 | 3 | Wasser | RAFT |
| **P7** | Diblock | 9 | 3 | Wasser | RAFT |
| **P8** | Diblock | 9 | 3 | Ethanol | RAFT |

### 2. Mörtelmischunqen

### 2.1 Herstellung

Die zu Testzwecken eingesetzte Mörtelmischung weist die in Tabelle 2 beschriebene Trockenzusammensetzung auf:

**Tabelle 2: Trockenzusammensetzung Mörtelmischung**

| **Komponente** | **Menge [g]** |
|---|---|
| Zement (CEM I 42.5 N; Normo 4; erhältlich bei Holcim Schweiz) | 750 g |
| Kalksteinfüller | 141 g |
| Sand 0-1 mm | 738 g |
| Sand 1-4 mm | 1107 g |
| Sand 4-8 mm | 1154 g |

Zum Anmachen einer Mörtelmischung wurden die Sande, der Kalksteinfüller und der Zement 1 Minute in einem Hobart-Mischer trocken gemischt. Innerhalb von 30 Sekunden wurde das Anmachwasser (Bezüglich Menge siehe Tabelle 3), dem vorgängig das jeweilige Polymer (vgl. Tabelle 3) beigemischt wurde, zugegeben und noch weitere 2.5 Minuten gemischt. Die Gesamtmischzeit nass dauerte jeweils 3 Minuten.

### 2.2 Mörteltests

Zur Bestimmung der Dispergierwirkung der Polymere wurde jeweils das Ausbreitmass (ABM) von angemachten Mörtelmischungen zu verschiedenen Zeiten gemessen. Das Ausbreitmass (ABM) des Mörtels wurde gemäss EN 1015-3 bestimmt.

Weiter wurde der Einfluss der Polymere auf das Hydratationsverhalten von mineralischen Bindemittelzusammensetzungen durch Messung der zeitlichen Temperaturentwicklung von Mörtelmischungen nach dem Anmachen mit Wasser ermittelt. Die Temperaturmessung erfolgte unter adiabatischen Bedingungen mit einem Thermoelement als Temperatursensor in an sich bekannter Weise. Sämtliche Proben wurden unter gleichen Bedingungen gemessen. Als Mass für die Erstarrungszeit wird im vorliegenden Fall die vom Anmachen der Mörtelmischung bis zum Erreichen des nach der Induktionsphase bzw. Ruhephase auftretenden Temperaturmaximums verstrichene Zeit [t(TM)] betrachtet (vgl. Fig. 1).

### 3. Resultate der Mörteltests

Tabelle 3 gibt eine Übersicht über die durchgeführten Mörteltests (**T1 - T12**) und die dabei erzielten Resultate. Versuch **R** ist ein zu Vergleichszwecken durchgeführter Nullversuch ohne Zugabe eines Polymers.

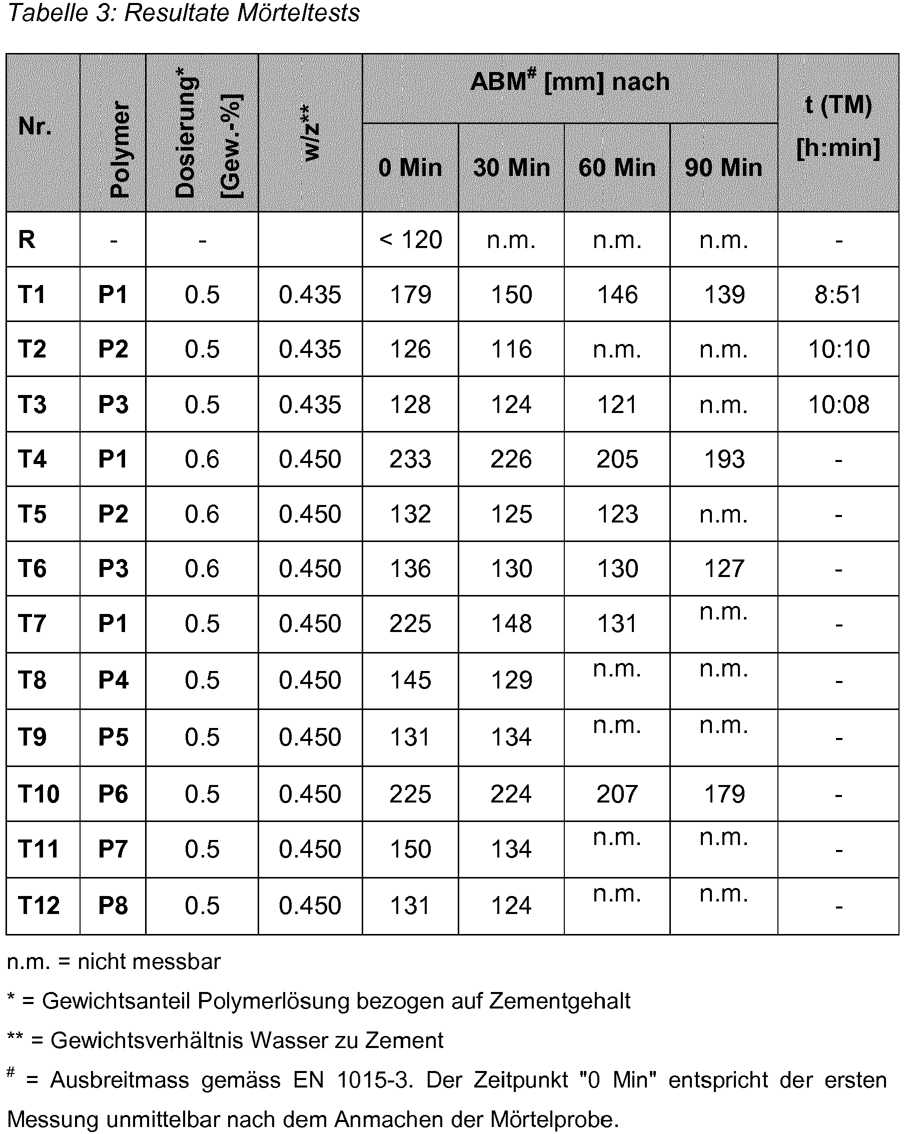

Ein Vergleich der Versuche **T1 - T3** zeigt, dass mit Polymer **P1** basierend auf einer Diblockstuktur bei gleichen Bedingungen eine höhere und länger anhaltende Verflüssigungswirkung erzielt wird als mit den analogen aber statistisch aufgebauten Polymeren **P2** und **P3.** Das gleiche Bild ergibt sich bei einem Vergleich der Versuche **T4** - **T6,** welche bei höherer Dosierung sowie höherem Wassergehalt durchgeführt wurden.

Zudem tritt das Temperaturmaximum mit Polymer **P1** bereits nach 8:51 h auf, während die Maxima bei Verwendung der anderen beiden Polymere **P2** und **P3** erst ca. 1:20 h später auftreten. Polymer **P1** ist also hinsichtlich der Verzögerung des Hydratationsverlaufs bzw. des Abbindens vorteilhafter.

Aus den Versuchen **T7** und **T8** wird ersichtlich, dass Polymer **P1** mit den längeren Seitenketten bzw. einem grösserem Wert für "n" (= Anzahl Ethylenoxideinheiten in Monomereinheit **M2;** n = 20 bei **P1**) vorteilhafter ist bezüglich der Verflüssigungswirkung im Vergleich zu Polymer **P4,** welches deutlich kürzere Seitenketten aufweist (n = 9). Zudem ergibt sich aus der Gegenüberstellung der Versuche **T8** und **T9,** dass die Verwendung von Wasser (H₂O) als Lösungsmittel während der Polymerisation vorteilhafter ist als die Verwendung von Ethanol.

Entsprechende Ergebnisse findet man auch für die in den Versuchen **T10** - **T12** verwendeten Polymere **P6** - **P8.**

Aus einem Vergleich der Versuche **T7** und **T10** lässt sich weiterhin schliessen, dass die anfänglich in etwa gleich starke Verflüssigungswirkung von Polymer **P6** mit einem Verhältnis von **M1/M2** = 3 über die Zeit besser aufrecht erhalten werden kann als mit Polymer **P1,** welches über ein Verhältnis von **M1/M2** = 1 verfügt.

Aus den präsentierten Resultaten lässt sich somit schliessen, dass die erfindungsgemässen Polymere in verschiedener Hinsicht vorteilhaft gegenüber bekannten Polymeren sind. Insbesondere können mit den erfindungsgemässen Polymeren bereits in relativ geringen Dosierungen hohe Dispergier- und Verflüssigungswirkungen erreicht werden, welche sich auch über vergleichsweise lange Zeit auf einem für die Praxis interessanten Niveau aufrechterhalten lassen. Weiterhin sind die erfindungsgemässen Polymere auch hinsichtlich der Verzögerungsproblematik äusserst vorteilhaft.

Die vorstehend beschriebenen Ausführungsformen sind jedoch lediglich als illustrative Beispiele zu verstehen, welche im Rahmen der Erfindung beliebig abgewandelt werden können.

## Patentansprüche

1. Blockcopolymer, insbesondere zur Verwendung als Dispergiermittel für mineralische Bindemittelzusammensetzungen, umfassend wenigstens einen ersten Block **A** und wenigstens einen zweiten Block **B,** wobei der erste Block **A** eine Monomereinheit **M1** der Formel I aufweist, 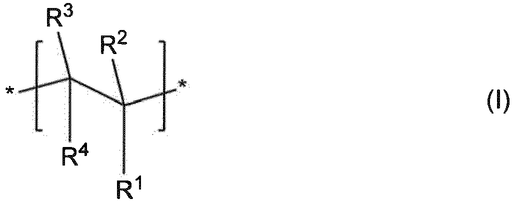 und der zweite Block B eine Monomereinheit **M2** der Formel II beinhaltet 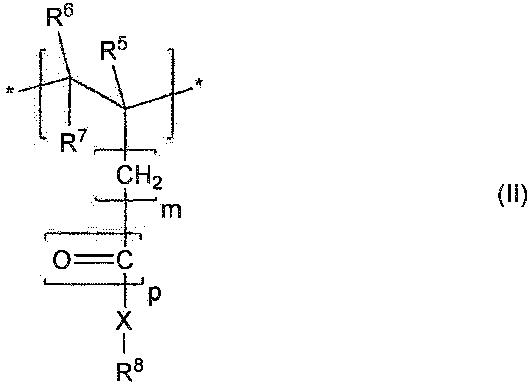 wobei
R¹, jeweils unabhängig voneinander, für -COOM, -SO₂-OM, -O-PO(OM)₂ und/oder -PO(OM)₂ steht,
R², jeweils unabhängig voneinander, für H oder eine Alkylgruppe mit 1 Kohlenstoffatom steht,
R³, R⁵ und R⁶, jeweils unabhängig voneinander, für H oder eine Alkylgruppe mit 1 bis 5 Kohlenstoffatomen stehen,
R⁴ und R⁷, jeweils unabhängig voneinander, für H, -COOM oder eine Alkylgruppe mit 1 bis 5 Kohlenstoffatomen stehen,
oder wobei R¹ mit R⁴ einen Ring bildet zu -CO-O-CO-,
M, unabhängig voneinander, H⁺, ein Alkalimetallion, ein Erdalkalimetallion, ein zwei oder dreiwertiges Metallion, oder ein Ammoniumion darstellt;
m = 0, 1 oder 2 ist,
p = 0 oder 1 ist,
X, jeweils unabhängig voneinander, für -O- oder -NH- steht,
R⁸ für eine Gruppe der Formel -[AO]ₙ-R^{a} steht,
wobei A = C₂- bis C₄-Alkylen, R^{a} für H, eine C₁- bis C₂₀-Alkylgruppe, -Cyclohexylgruppe oder -Alkylarylgruppe steht,
und n = 2 - 250, insbesondere 10 - 200 ist;
und wobei ein allenfalls vorhandener Anteil von Monomereinheiten **M2** im ersten Block **A** kleiner als 25 Mol-%, insbesondere kleiner gleich 10 Mol-%, ist, bezogen auf sämtliche Monomereinheiten **M1** im ersten Block **A** und wobei ein allenfalls vorhandener Anteil von Monomereinheiten **M1** im zweiten Block **B** kleiner als 25 Mol-%, insbesondere kleiner gleich 10 Mol-%, ist, bezogen auf sämtliche Monomereinheiten **M2** im zweiten Block **B.**

2. Blockcopolymer nach Anspruch 1, **dadurch gekennzeichnet, dass** der wenigstens eine erste Block **A** 5 - 70, insbesondere 7 - 40, bevorzugt 10 - 25 Monomereinheiten **M1** umfasst und/oder dass der wenigstens eine zweite Block **B** 5 - 70, insbesondere 7-40, bevorzugt 10 - 25, Monomereinheiten **M2** umfasst.

3. Blockcopolymer nach wenigstens einem der Ansprüche 1 - 2, **dadurch gekennzeichnet, dass** der erste Block **A** 25 - 35 Monomereinheiten **M1** umfasst und/oder dass der wenigstens eine zweite Block **B** 10 - 20 Monomereinheiten **M2** umfasst.

4. Blockcopolymer nach wenigstens einem der Ansprüche 1 - 3, **dadurch gekennzeichnet, dass** ein Molverhältnis der Monomereinheiten **M1** zu den Monomereinheiten **M2** im Bereich von 0.5 - 6, insbesondere 0.7 - 4, bevorzugt 0.9 - 3.8, weiter bevorzugt 1.0 - 3.7 oder 2 - 3.5 liegt.

5. Blockcopolymer nach wenigstens einem der Ansprüche 1 - 4, **dadurch gekennzeichnet, dass** der erste Block **A,** bezogen auf sämtliche Monomereinheiten im ersten Block **A,** zu wenigstens 20 Mol-%, insbesondere wenigstens 50 Mol-%, im Besonderen wenigstens 75 Mol-%, speziell wenigstens 90 Mol-%, aus Monomereinheiten **M1** der Formel I besteht und/oder dass der zweite Block **B,** bezogen auf sämtliche Monomereinheiten im zweiten Block **B,** zu wenigstens 20 Mol-%, insbesondere wenigstens 50 Mol-%, im Besonderen wenigstens 75 Mol-%, speziell wenigstens 90 Mol-%, aus Monomereinheiten **M2** der Formel II besteht.

6. Blockcopolymer nach wenigstens einem der Ansprüche 1 - 5, **dadurch gekennzeichnet, dass** das Blockcopolymer wenigstens eine weitere Monomereinheit **MS** umfasst, welche insbesondere eine Monomereinheit der Formel III ist: 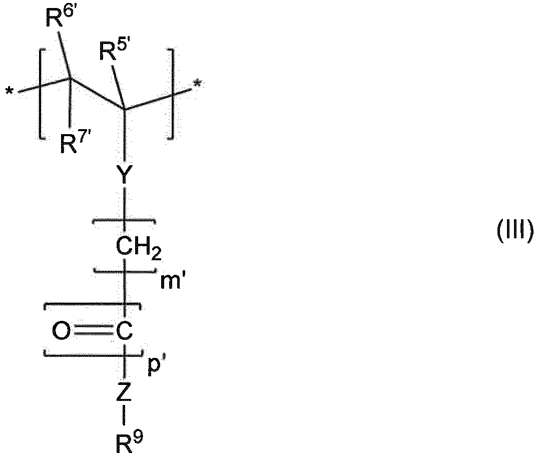 wobei
R^{5'}, R^{6'}, R^{7'}, m' und p' wie R⁵, R⁶, R⁷, m und p in Anspruch 1 definiert sind;
Y, jeweils unabhängig voneinander, für eine chemische Bindung oder -O-steht;
Z, jeweils unabhängig voneinander, für eine chemische Bindung, -O- oder -NH- steht;
R⁹, jeweils unabhängig voneinander, für eine Alkylgruppe, Cycloalkylgruppe, Alkylarylgruppe, Arylgruppe, Hydroxyalkylgruppe oder eine Acetoxyalkylgruppe, jeweils mit 1 - 20 C-Atomen, steht.

7. Blockcopolymer nach wenigstens einem der Ansprüche 1 - 6, **dadurch gekennzeichnet, dass** R¹ = COOM ist; R² und R⁵, unabhängig voneinander, für H, -CH₃ oder Mischungen daraus stehen; R³ und R⁶, unabhängig voneinander, für H oder -CH₃, bevorzugt für H, stehen; R⁴ und R⁷, unabhängig voneinander, für H oder -COOM, bevorzugt für H, stehen; und wobei X bei wenigstens 75 Mol-%, insbesondere bei wenigstens 90 Mol-%, speziell bei wenigstens 99 Mol-% aller Monomereinheiten **M2** für -O- steht.

8. Blockcopolymer nach wenigstens einem der Ansprüche 1 - 7, **dadurch gekennzeichnet, dass** n = 10 - 150, insbesondere n = 15 - 100, bevorzugt n = 17 - 70, im Speziellen n = 19 - 45, ist.

9. Blockcopolymer nach wenigstens einem der Ansprüche 1 - 8, **dadurch gekennzeichnet, dass** es sich um ein Diblockcopolymer, bestehend aus einem Block **A** und einem Block **B** handelt.

10. Verfahren zur Herstellung eines Blockcopolymers nach wenigstens einem der Ansprüche 1 - 9, umfassend einen Schritt
a) der Polymerisation von Monomeren **m1** der Formel IV 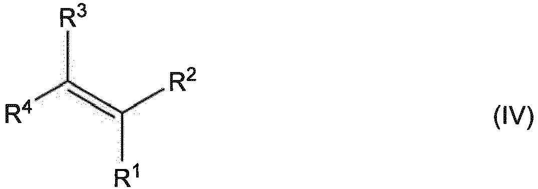 sowie einen Schritt
b) der Polymerisation von Monomeren **m2** der Formel V 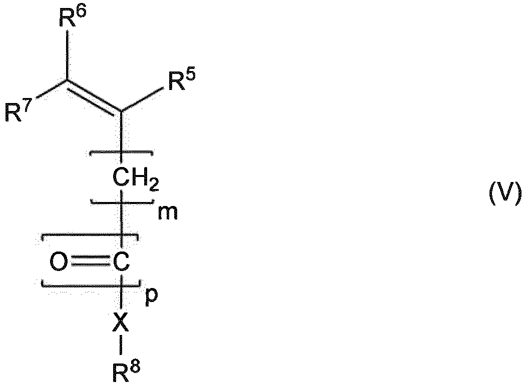
wobei R¹, R², R³, R⁴, R⁵, R⁶, R⁷, R⁸, m, p und X wie in Anspruch 1 definiert sind und
wobei bei Schritt a) ein allenfalls vorhandener Anteil an Monomer **m2** kleiner als 25 Mol-%, insbesondere kleiner gleich 10 Mol-%, bezogen auf die Monomere **m1,** ist und bei Schritt b) ein allenfalls vorhandener Anteil an Monomer **m1** kleiner als 25 Mol-%, insbesondere kleiner gleich 10 Mol-%, bezogen auf die Monomere **m2,** ist;
und wobei die Schritte a) und b) zeitlich nacheinander, in beliebiger Reihenfolge ausgeführt werden.

11. Verfahren nach Anspruch 10, **dadurch gekennzeichnet, dass** die Polymerisation durch Reversible Additions-Fragmentierungs Kettenübertragungs-Polymerisation (RAFT) erfolgt.

12. Verfahren nach wenigstens einem der Ansprüche 10 - 11, **dadurch gekennzeichnet, dass** die Polymerisation in Schritt a) so lange durchgeführt wird, bis 75 - 95 Mol-%, insbesondere 80 - 92 Mol-%, der ursprünglich vorgelegten Monomere **m1** umgesetzt oder polymerisiert sind und/oder **dadurch gekennzeichnet, dass** die Polymerisation in Schritt b) so lange durchgeführt wird, bis 75 - 95 Mol-%, insbesondere 80 - 92 Mol-%, der ursprünglich vorgelegten Monomere **m2** umgesetzt oder polymerisiert sind.

13. Verfahren nach wenigstens einem der Ansprüche 10 - 12, **dadurch gekennzeichnet, dass** in Schritt a) und/oder in Schritt b) wenigstens ein weiteres polymerisierbares Monomer ms vorliegt, wobei es sich insbesondere um ein Monomer der Formel VI handelt 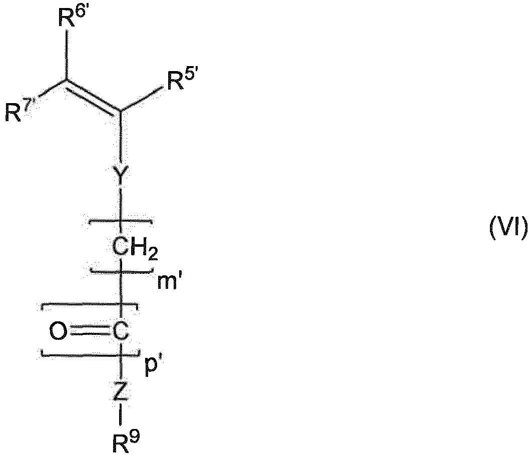 wobei
R^{5'}, R^{6'}, R^{7'}, R⁹, m', p', Y und Z wie in Anspruch 6 definiert sind.

14. Verwendung eines Blockcopolymers als Dispergiermittel für eine mineralische Bindemittelzusammensetzung, insbesondere zur Verflüssigung, zur Wasserreduktion und/oder zur Verlängerung der Verarbeitbarkeit einer mineralischen Bindemittelzusammensetzung, bevorzugt einer Mörtel- oder Betonzusammensetzung, wobei das Blockcopolymer wenigstens einen ersten Block **A** und wenigstens einen zweiten Block **B** umfasst, wobei
der erste Block **A** eine Monomereinheit **M1** der Formel I aufweist, 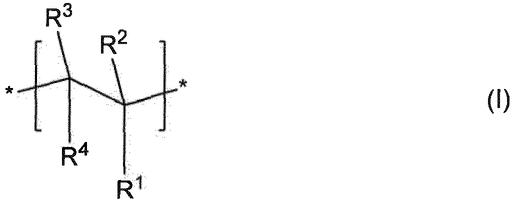 und der zweite Block **B eine** Monomereinheit **M2** der Formel II beinhaltet 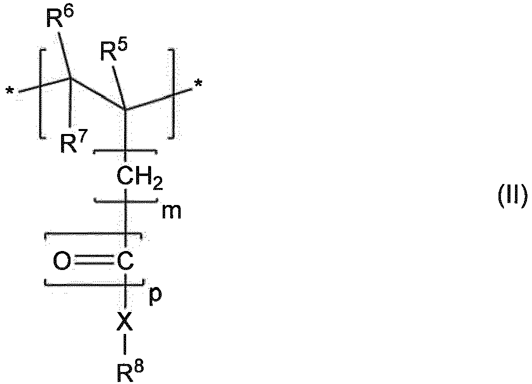 wobei
R¹, jeweils unabhängig voneinander, für -COOM, -SO₂-OM, -O-PO(OM)₂ und/oder -PO(OM)₂ steht,
R², R³, R⁵ und R⁶, jeweils unabhängig voneinander, für H oder eine Alkylgruppe mit 1 bis 5 Kohlenstoffatomen stehen,
R⁴ und R⁷, jeweils unabhängig voneinander, für H, -COOM oder eine Alkylgruppe mit 1 bis 5 Kohlenstoffatomen stehen,
oder wobei R¹ mit R⁴ einen Ring bildet zu -CO-O-CO-,
M, unabhängig voneinander, H⁺, ein Alkalimetallion, ein Erdalkalimetallion, ein zwei oder dreiwertiges Metallion, ein Ammoniumion oder eine organische Ammoniumgruppe darstellt;
m = 0, 1 oder 2 ist,
p = 0 oder 1 ist,
X, jeweils unabhängig voneinander, für -O- oder -NH- steht,
R⁸ für eine Gruppe der Formel -[AO]ₙ-R^{a} steht,
wobei A = C₂- bis C₄-Alkylen, R^{a} für H, eine C₁- bis C₂₀-Alkylgruppe, -Cyclohexylgruppe oder -Alkylarylgruppe steht,
und n = 2 - 250, insbesondere 10 - 200 ist;
und wobei ein allenfalls vorhandener Anteil von Monomereinheiten **M2** im ersten Block **A** kleiner als 25 Mol-%, insbesondere kleiner gleich 10 Mol-%, ist, bezogen auf sämtliche Monomereinheiten **M1** im ersten Block **A** und wobei ein allenfalls vorhandener Anteil von Monomereinheiten **M1** im zweiten Block **B** kleiner als 25 Mol-%, insbesondere kleiner gleich 10 Mol-%, ist, bezogen auf sämtliche Monomereinheiten **M2** im zweiten Block **B.**

15. Mineralische Bindemittelzusammensetzung, insbesondere einer Mörtel- oder Betonzusammensetzung, enthaltend mindestens ein wie in einem der vorstehenden Ansprüche beschriebenes Blockcopolymer.

16. Formkörper, insbesondere ein Bestandteil eines Bauwerks, erhältlich durch Aushärten einer mineralischen Bindemittelzusammensetzung gemäss Anspruch 15 nach Zugabe von Wasser.

## Claims

1. Block copolymer, in particular for use as a dispersant for mineral binder compositions, comprising at least one first block **A** and at least one second block **B,** the first block **A** having a monomer unit **M1** of the formula I, 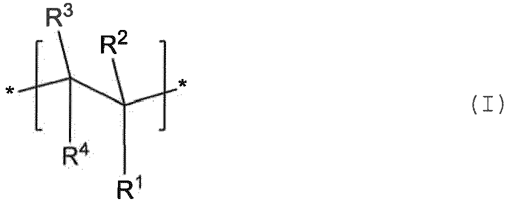 and the second block **B** containing a monomer unit **M2** of the formula II 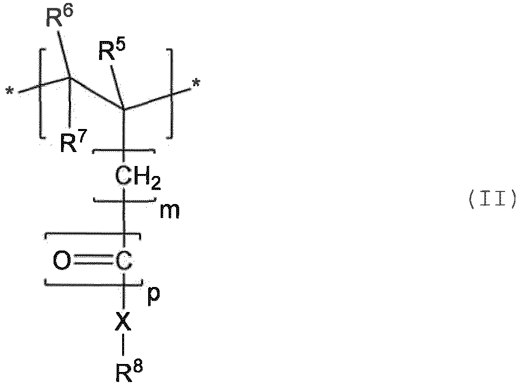 where
R¹, in each case independently of any other, is-COOM, -SO₂-OM, -O-PO(OM)₂ and/or -PO(OM)₂,
R², in each case independently of any other, is H or an alkyl group having 1 carbon atom,
R³, R⁵ and R⁶, each independently of one another, are H or an alkyl group having 1 to 5 carbon atoms,
R⁴ and R⁷, each independently of one another, are H, -COOM or an alkyl group having 1 to 5 carbon atoms,
or where R¹ with R⁴ forms a ring to -CO-O-CO-,
M, independently of any other, is H⁺, an alkali metal ion, an alkaline earth metal ion, a di- or trivalent metal ion, or an ammonium ion;
m = 0, 1 or 2,
p = 0 or 1,
X, in each case independently of any other, is -O- or -NH-,
R⁸ is a group of the formula -[AO]ₙ-R^{a},
where A = C₂- to C₄-alkylene, R^{a} is H, or a C₁- to C₂₀-alkyl group, -cyclohexyl group or -alkylaryl group,
and n = 2 - 250, more particularly 10 - 200;
and where any fraction of monomer units **M2** present in the first block **A** is less than 25 mol%, more particularly less than or equal to 10 mol%, based on all the monomer units **M1** in the first block **A,** and where any fraction of monomer units **M1** present in the second block **B** is less than 25 mol%, more particularly less than or equal to 10 mol%, based on all the monomer units **M2** in the second block **B.**

2. Block copolymer according to Claim 1, **characterized in that** the at least one first block **A** comprises 5 - 70, more particularly 7 - 40, preferably 10-25 monomer units **M1** and/or **in that** the at least one second block **B** comprises 5 - 70, more particularly 7 - 40, preferably 10 - 25 monomer units **M2.**

3. Block copolymer according to at least one of Claims 1 - 2, **characterized in that** the first block **A** comprises 25 - 35 monomer units **M1** and/or **in that** the at least one second block **B** comprises 10 - 20 monomer units **M2.**

4. Block copolymer according to at least one of Claims 1 - 3, **characterized in that** a molar ratio of the monomer units **M1** to the monomer units **M2** is situated in the range of 0.5 - 6, more particularly 0.7 - 4, preferably 0.9 - 3.8, more preferably 1.0 - 3.7 or 2 - 3.5.

5. Block copolymer according to at least one of Claims 1 - 4, **characterized in that** the first block **A,** based on all the monomer units in the first block **A,** consists to an extent of at least 20 mol%, more particularly at least 50 mol%, in particular at least 75 mol%, especially at least 90 mol%, of monomer units **M1** of the formula I and/or **in that** the second block **B,** based on all the monomer units in the second block **B,** consists to an extent of at least 20 mol%, more particularly at least 50 mol%, in particular at least 75 mol%, especially at least 90 mol%, of monomer units **M2** of the formula II.

6. Block copolymer according to at least one of Claims 1 - 5, **characterized in that** the block copolymer comprises at least one further monomer unit **MS** which in particular is a monomer unit of the formula III: 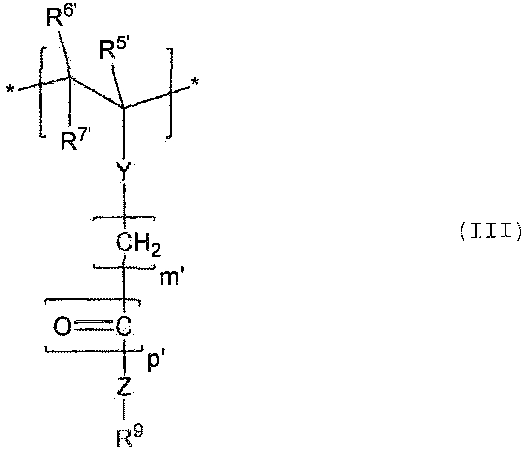 where
R^{5'}, R^{6'}, R^{7'}, m' and p' are defined like R⁵, R⁶, R⁷, m and p in Claim 1;
Y, in each case independently of any other, is a chemical bond or -O-;
Z, in each case independently of any other, is a chemical bond, -O- or -NH-;
R⁹, in each case independently of any other, is an alkyl group, cycloalkyl group, alkylaryl group, aryl group, hydroxyalkyl group or an acetoxyalkyl group, in each case having 1 - 20 C atoms.

7. Block copolymer according to at least one of Claims 1 - 6, **characterized in that** R¹ = COOM; R² and R⁵, independently of one another, are H, -CH₃ or mixtures thereof; R³ and R⁶, independently of one another, are H or -CH₃, preferably H; R⁴ and R⁷, independently of one another, are H or -COOM, preferably H; and X for at least 75 mol%, more particularly at least 90 mol%, especially at least 99 mol% of all monomer units **M2,** is -0-.

8. Block copolymer according to at least one of Claims 1 - 7, **characterized in that** n = 10 - 150, more particularly n = 15 - 100, preferably n = 17-70, especially n = 19 - 45.

9. Block copolymer according to at least one of Claims 1 - 8, **characterized in that** it is a diblock copolymer, consisting of a block **A** and a block **B.**

10. Process for preparing a block copolymer according to at least one of Claims 1 - 9, comprising a step of
a) polymerizing monomers **m1** of the formula IV 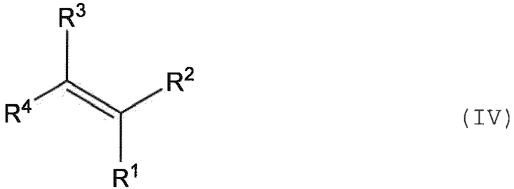 and also a step of
b) polymerizing monomers **m2** of the formula V 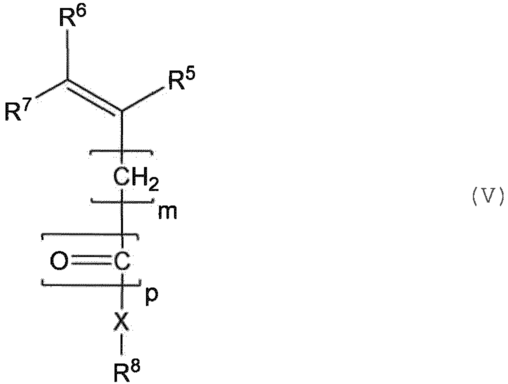 where R¹, R², R³, R⁴, R⁵, R⁶, R⁷, R⁸, m, p and X are defined as in Claim 1 and where in step a) any fraction of monomer **m2** present is less than 25 mol%, more particularly less than or equal to 10 mol%, based on the monomers **m1,** and in step b) any fraction of monomer **m1** present is less than 25 mol%, more particularly less than or equal to 10 mol%, based on the monomers **m2;** and where the steps a) and b) are performed in temporal succession in any order.

11. Process according to Claim 10, **characterized in that** the polymerization is accomplished by reversible addition-fragmentation chain transfer polymerization (RAFT).

12. Process according to at least one of Claims 10-11, **characterized in that** the polymerization in step a) is carried out until 75 - 95 mol%, more particularly 80 - 92 mol%, of the monomers **m1** originally introduced have undergone reaction or polymerization, and/or **characterized in that** the polymerization in step b) is carried out until 75-95 mol%, more particularly 80 - 92 mol%, of the monomers **m2** originally introduced have undergone reaction or polymerization.

13. Process according to at least one of Claims 10-12, **characterized in that** in step a) and/or in step b) there is at least one further polymerizable monomer **ms,** this being more particularly a monomer of the formula VI 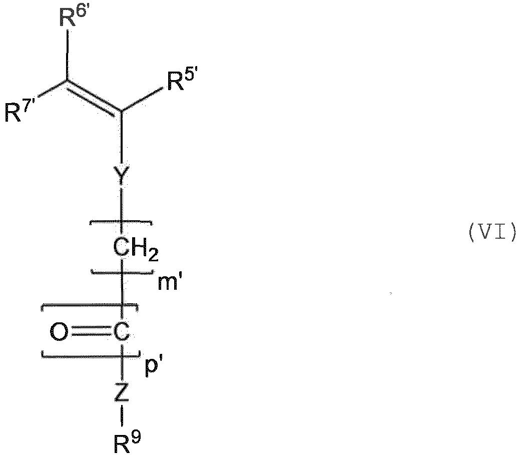 where
R^{5'}, R^{6'}, R^{7'}, R⁹, m', p', Y and Z are defined as in Claim 6.

14. Use of a block copolymer as a dispersant for a mineral binder composition, more particularly for plasticizing, for water reduction and/or for extending the workability of a mineral binder composition, preferably of a mortar or concrete composition, the block copolymer comprising at least one first block **A** and at least one second block **B,**
the first block **A** having a monomer unit **M1** of the formula I, 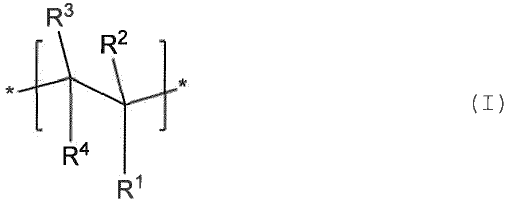 and the second block **B** containing a monomer unit **M2** of the formula II 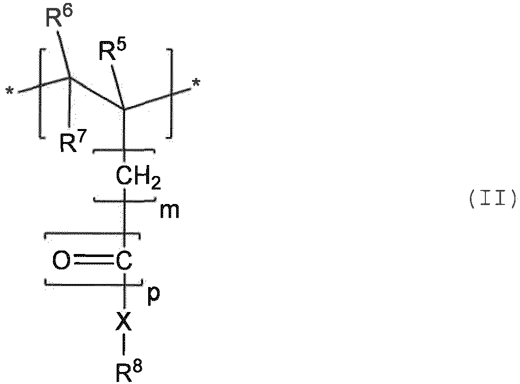 where
R¹, in each case independently of any other, is-COOM, -SO₂-OM, -O-PO(OM)₂ and/or -PO(OM)₂,
R², R³, R⁵ and R⁶, each independently of one another, are H or an alkyl group having 1 to 5 carbon atoms,
R⁴ and R⁷, each independently of one another, are H, -COOM or an alkyl group having 1 to 5 carbon atoms,
or where R¹ with R⁴ forms a ring to -CO-O-CO-,
M, independently of any other, is H⁺, an alkali metal ion, an alkaline earth metal ion, a di- or trivalent metal ion, an ammonium ion or an organic ammonium group;
m = 0, 1 or 2,
p = 0 or 1,
X, in each case independently of any other, is -O- or -NH-,
R⁸ is a group of the formula -[AO]ₙ-R^{a},
where A = C₂- to C₄-alkylene, R^{a} is H, or a C₁- to C₂₀-alkyl group, -cyclohexyl group or -alkylaryl group,
and n = 2 - 250, more particularly 10 - 200;
and where any fraction of monomer units **M2** present in the first block **A** is less than 25 mol%, more particularly less than or equal to 10 mol%, based on all the monomer units **M1** in the first block **A,** and where any fraction of monomer units **M1** present in the second block **B** is less than 25 mol%, more particularly less than or equal to 10 mol%, based on all the monomer units **M2** in the second block **B.**

15. Mineral binder composition, more particularly a mortar or concrete composition, comprising at least one block copolymer as described in any of the preceding claims.

16. Shaped article, more particularly a constituent of a construction, obtainable by fully curing a mineral binder composition according to Claim 15 following addition of water.

## Revendications

1. Copolymère séquencé, notamment destiné à une utilisation en tant qu'agent dispersant pour des compositions de liant minérales, comprenant au moins une première séquence **A** et au moins une deuxième séquence **B,** la première séquence **A** comprenant une unité monomère **M1** de la formule I : 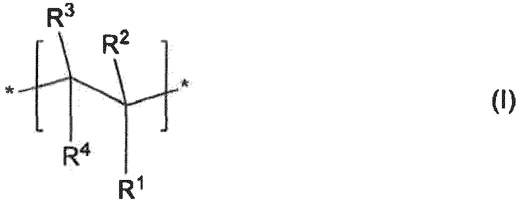 et la deuxième séquence **B** contenant une unité monomère **M2** de la formule II : 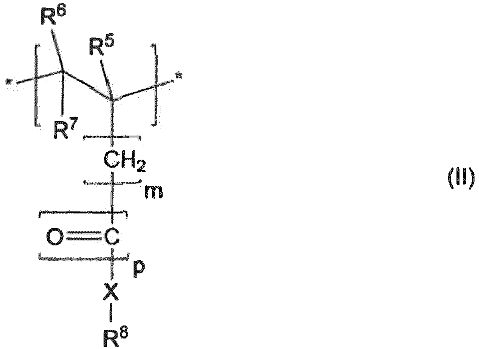 dans lesquelles
les R¹ représentent, chacun indépendamment les uns des autres, -COOM, -SO₂-OM, -O-PO(OM)₂ et/ou -PO(OM)₂,
les R² représentent, chacun indépendamment les uns des autres, H ou un groupe alkyle contenant 1 atome de carbone,
R³, R⁵ et R⁶ représentent, chacun indépendamment les uns des autres, H ou un groupe alkyle contenant 1 à 5 atomes de carbone,
R⁴ et R⁷ représentent, chacun indépendamment l'un de l'autre, H, -COOM ou un groupe alkyle contenant 1 à 5 atomes de carbone,
ou dans lesquelles R¹ forme avec R⁴ un cycle pour obtenir -CO-O-CO-,
les M représentent, indépendamment les uns des autres, H⁺, un ion de métal alcalin, un ion de métal alcalino-terreux, un ion métallique bi- ou trivalent, ou un ion ammonium ;
m = 0, 1 ou 2,
p = 0 ou 1,
les X représentent, chacun indépendamment les uns des autres, -O- ou -NH-,
R⁸ représente un groupe de la formule -[AO]ₙ-R^{a},
avec A = alkylène en C₂ à C₄, R^{a} représentant H, un groupe alkyle en C₁ à C₂₀, un groupe cyclohexyle en C₁ à C₂₀ ou un groupe alkylaryle en C₁ à C₂₀,
et n = 2 à 250, notamment 10 à 200 ;
et une proportion éventuellement présente d'unités monomères **M2** dans la première séquence **A** étant inférieure à 25 % en moles, notamment inférieure ou égale à 10 % en moles, par rapport à la totalité des unités monomères **M1** dans la première séquence **A,** et une proportion éventuellement présente d'unités monomères **M1** dans la deuxième séquence **B** étant inférieure à 25 % en moles, notamment inférieure ou égale à 10 % en moles, par rapport à la totalité des unités monomères **M2** dans la deuxième séquence **B.**

2. Copolymère séquencé selon la revendication 1, **caractérisé en ce que** ladite au moins une première séquence **A** comprend 5 à 70, notamment 7 à 40, de préférence 10 à 25 unités monomères **M1,** et/ou **en ce que** ladite au moins une deuxième séquence **B** comprend 5 à 70, notamment 7 à 40, de préférence 10 à 25 unités monomères **M2.**

3. Copolymère séquencé selon au moins l'une quelconque des revendications 1 et 2, **caractérisé en ce que** la première séquence **A** comprend 25 à 35 unités monomères **M1** et/ou **en ce que** ladite au moins une deuxième séquence **B** comprend 10 à 20 unités monomères **M2.**

4. Copolymère séquencé selon au moins l'une quelconque des revendications 1 à 3, **caractérisé en ce qu'**un rapport molaire entre les unités monomères **M1** et les unités monomères **M2** se situe dans la plage allant de 0,5 à 6, notamment de 0,7 à 4, de préférence de 0,9 à 3,8, de manière davantage préférée de 1,0 à 3,7 ou de 2 à 3,5.

5. Copolymère séquencé selon au moins l'une quelconque des revendications 1 à 4, **caractérisé en ce que** la première séquence **A** est constituée, par rapport à la totalité des unités monomères dans la première séquence **A,** par au moins 20 % en moles, notamment au moins 50 % en moles, en particulier au moins 75 % en moles, spécialement au moins 90 % en moles, d'unités monomères **M1** de la formule I, et/ou **en ce que** la deuxième séquence **B** est constituée, par rapport à la totalité des unités monomères dans la deuxième séquence **B,** par au moins 20 % en moles, notamment au moins 50 % en moles, en particulier au moins 75 % en moles, spécialement au moins 90 % en moles, d'unités monomères **M2** de la formule II.

6. Copolymère séquencé selon au moins l'une quelconque des revendications 1 à 5, **caractérisé en ce que** le copolymère séquencé comprend au moins une unité monomère supplémentaire **MS,** qui est notamment une unité monomère de la formule III : 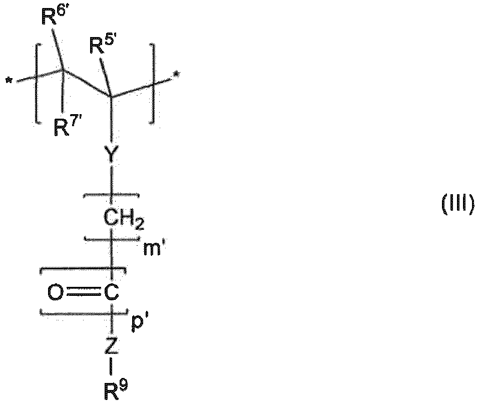 dans laquelle
R⁵', R⁶', R⁷', m' et p' sont définis tels que R⁵, R⁶, R⁷, m et p dans la revendication 1 ;
les Y représentent, chacun indépendamment les uns des autres, une liaison chimique ou -O- ;
les Z représentent, chacun indépendamment les uns des autres, une liaison chimique, -O- ou -NH- ;
les R⁹ représentent, chacun indépendamment les uns des autres, un groupe alkyle, un groupe cycloalkyle, un groupe alkylaryle, un groupe aryle, un groupe hydroxyalkyle ou un groupe acétoxyalkyle, contenant à chaque fois 1 à 20 atomes C.

7. Copolymère séquencé selon au moins l'une quelconque des revendications 1 à 6, **caractérisé en ce que** R¹ = COOM ; R² et R⁵ représentent, indépendamment l'un de l'autre, H, -CH₃ ou des mélanges de ceux-ci ; R³ et R⁶ représentent, indépendamment l'un de l'autre, H ou -CH₃, de préférence H ; R⁴ et R⁷ représentent, indépendamment l'un de l'autre, H ou -COOM, de préférence H ; et X représente -O- dans au moins 75 % en moles, notamment dans au moins 90 % en moles, spécialement dans au moins 99 % en moles, de toutes les unités monomères **M2.**

8. Copolymère séquencé selon au moins l'une quelconque des revendications 1 à 7, **caractérisé en ce que** n = 10 à 150, notamment n = 15 à 100, de préférence n = 17 à 70, spécialement n = 19 à 45.

9. Copolymère séquencé selon au moins l'une quelconque des revendications 1 à 8, **caractérisé en ce qu'**il s'agit d'un copolymère diséquencé, constitué par une séquence **A** et une séquence **B.**

10. Procédé de fabrication d'un copolymère séquencé selon au moins l'une quelconque des revendications 1 à 9, comprenant une étape
a) de polymérisation de monomères **m1** de la formule IV : 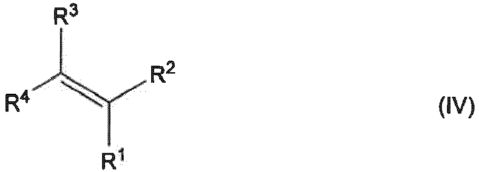 ainsi qu'une étape
b) de polymérisation de monomères **m2** de la formule V : 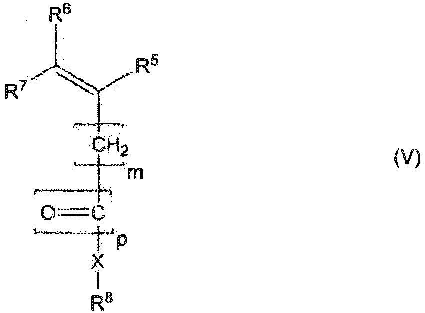
dans lesquelles
R¹, R², R³, R⁴, R⁵, R⁶, R⁷, R⁸, m, p et X sont tels que définis dans la revendication 1, et
une proportion éventuellement présente de monomère **m2** à l'étape a) étant inférieure à 25 % en moles, notamment inférieure ou égale à 10 % en moles, par rapport aux monomères **m1,** et une proportion éventuellement présente de monomère **m1** à l'étape b) étant inférieure à 25 % en moles, notamment inférieure ou égale à 10 % en moles, par rapport aux monomères **m2** ;
et les étapes a) et b) étant réalisées successivement dans le temps, dans un ordre quelconque.

11. Procédé selon la revendication 10, **caractérisé en ce que** la polymérisation a lieu par polymérisation par transfert de chaîne par addition-fragmentation réversible (RAFT).

12. Procédé selon au moins l'une quelconque des revendications 10 et 11, **caractérisé en ce que** la polymérisation à l'étape a) est réalisée jusqu'à ce que 75 à 95 % en moles, notamment 80 à 92 % en moles, des monomères **m1** initialement chargés aient réagi ou ait été polymérisés, et/ou **caractérisé en ce que** la polymérisation à l'étape b) est réalisée jusqu'à ce que 75 à 95 % en moles, notamment 80 à 92 % en moles, des monomères **m2** initialement chargés aient réagi ou ait été polymérisés.

13. Procédé selon au moins l'une quelconque des revendications 10 à 12, **caractérisé en ce qu'**au moins un monomère polymérisable supplémentaire **ms** est présent à l'étape a) et/ou à l'étape b), celui-ci consistant notamment en un monomère de la formule VI : 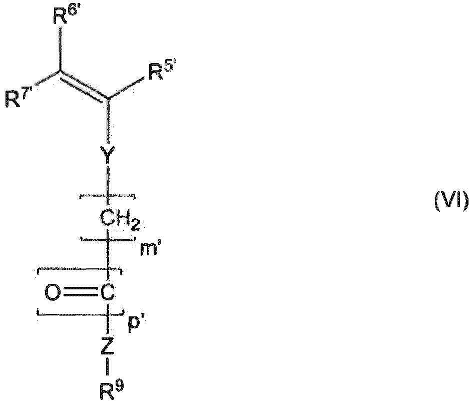 dans laquelle
R^{5'}, R^{6'}, R^{7'}, R⁹, m', p', Y et Z sont tels que définis dans la revendication 6.

14. Utilisation d'un copolymère séquencé en tant qu'agent dispersant pour une composition de liant minérale, notamment pour la liquéfaction, pour la réduction de l'eau et/ou pour le prolongement de l'usinabilité d'une composition de liant minérale, de préférence d'une composition de mortier ou de béton, le copolymère séquencé comprenant au moins une première séquence **A** et au moins une deuxième séquence **B,**
la première séquence **A** comprenant une unité monomère **M1** de la formule I : 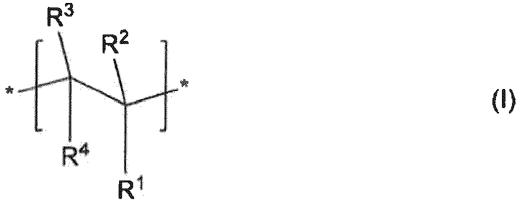 et la deuxième séquence **B** contenant une unité monomère **M2** de la formule II : 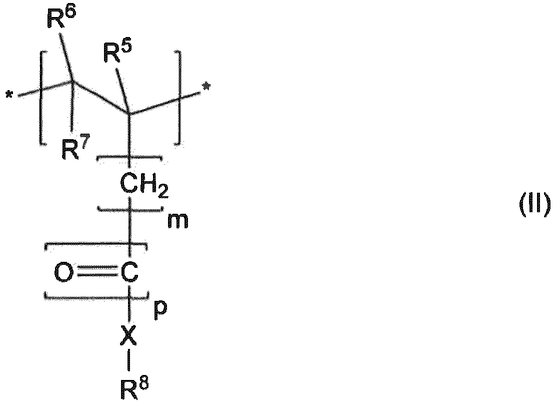 dans lesquelles
les R¹ représentent, chacun indépendamment les uns des autres, -COOM, -SO₂-OM, -O-PO(OM)₂ et/ou -PO(OM)₂, R², R³, R⁵ et R⁶ représentent, chacun indépendamment les uns des autres, H ou un groupe alkyle contenant 1 à 5 atomes de carbone,
R⁴ et R⁷ représentent, chacun indépendamment l'un de l'autre, H, -COOM ou un groupe alkyle contenant 1 à 5 atomes de carbone,
ou dans lesquelles R¹ forme avec R⁴ un cycle pour obtenir -CO-O-CO-,
les M représentent, indépendamment les uns des autres, H+, un ion de métal alcalin, un ion de métal alcalino-terreux, un ion métallique bi- ou trivalent, un ion ammonium ou un groupe ammonium organique ;
m = 0, 1 ou 2,
p = 0 ou 1,
les X représentent, chacun indépendamment les uns des autres, -O- ou -NH-,
R⁸ représente un groupe de la formule -[AO]n-R^{a},
avec A = alkylène en C₂ à C₄, R^{a} représentant H, un groupe alkyle en C₁ à C₂₀, un groupe cyclohexyle en C₁ à C₂₀ ou un groupe alkylaryle en C₁ à C₂₀,
et n = 2 à 250, notamment 10 à 200 ;
et une proportion éventuellement présente d'unités monomères **M2** dans la première séquence **A** étant inférieure à 25 % en moles, notamment inférieure ou égale à 10 % en moles, par rapport à la totalité des unités monomères **M1** dans la première séquence **A,** et une proportion éventuellement présente d'unités monomères **M1** dans la deuxième séquence B étant inférieure à 25 % en moles, notamment inférieure ou égale à 10 % en moles, par rapport à la totalité des unités monomères M2 dans la deuxième séquence **B.**

15. Composition de liant minérale, notamment composition de mortier ou de béton, contenant au moins un copolymère séquencé tel que décrit dans l'une quelconque des revendications précédentes.

16. Corps moulé, notamment constituant d'un ouvrage, pouvant être obtenu par durcissement d'une composition de liant minérale selon la revendication 15 après l'ajout d'eau.
